# EUROPÄISCHE PATENTANMELDUNG

(11) **EP 2 746 349 A1**
(43) Veröffentlichungstag der Anmeldung: **25.06.2014**
(21) Anmeldenummer: 12199239.0
(22) Anmeldetag: 21.12.2012
(51) Int. Cl.: C09D 17/00

(54) **Pigmentpräparation mit Metalleffektpigmenten, Verfahren zu deren Herstellung und Verwendung derselben**

(71) Anmelder: Eckart GmbH, 91235 Hartenstein (DE)
(72) Erfinder: Dietz, Friedrich, 91233 Neunkirchen am Sand (DE); Herold, Monika, 91287 Plech (DE); Kroell, Andreas, 91235 Hartenstein (DE); Schaeffer, Frank, 91235 Velden (DE); Prölß, Dieter, 91126 Schwabach (DE)
(74) Vertreter: Louis Pöhlau Lohrentz

(57) **Zusammenfassung**

Die Erfindung betrifft eine Pigmentpräparation mit Metalleffektpigmenten, wobei die Pigmentpräparation Metallefifektpigmente, deren mittlere Größe d₅₀ in einem Bereich von 1,7 bis 2,8 µm und deren mittlere Dicke h₅₀ in einem Bereich von 15 bis 50 nm liegt, sowie wenigstens eine Polycarbonsäure enthält. Die Erfindung betrifft des Weiteren ein Verfahren zur Herstellung dieser Pigmentpräparation als auch die Verwendung derselben.

## Beschreibung

Die vorliegende Erfindung betrifft eine Pigmentpräparation mit Metalleffektpigmenten, wobei die Pigmentpräparation Metalleffektpigmente, deren mittlere Größe d₅₀ in einem Bereich von 1,7 bis 2,8 µm und deren mittlere Dicke h₅₀ in einem Bereich von 15 bis 50 nm liegt, sowie wenigstens eine Polycarbonsäure enthält. Die Erfindung betrifft ferner die Bereitstellung eines Verfahrens zur Herstellung der erfindungsgemäßen Pigmentpräparation. Schließlich betrifft die Erfindung die Verwendung der erfindungsgemäßen Pigmentpräparation in einer Flexodruckfarbe.

Aus der WO 2009/010288 A2 ist die Verwendung von durch Vermahlung hergestellten Aluminiumeffektpigmenten in einer Tintenstrahldrucktinte bekannt. Der d₅₀-Wert liegt in einem Bereich von 1 bis 15 µm. Gemäß einer bevorzugten Weiterbildung liegt der mittlere Durchmesser, mithin der d₅₀-Wert, der Partikel in einem Bereich von 2 bis 5 µm. Die mittlere Dicke der Aluminiumeffektpigmente liegt in einem Bereich von 15 bis 150 nm, vorzugsweise von 20 bis 80 nm.

Es hat sich gezeigt, dass die durchschnittliche Größenverteilung der aus der WO 2009/010288 A2 bekannten Aluminiumeffektpigmente sich insbesondere zur Verwendung in Inkjet Druckfarben eignet.

Aus der WO 2008/077612 A2 sind plättchenförmige Aluminiumpigmente mit enger Dickenverteilung, welche wenigstens teilweise mit Schmiermittel belegt sind, bekannt. Die mittlere Dicke der plättchenförmigen Aluminiumpigmente liegt in einem Bereich von 15 bis 25 nm. Vorzugsweise werden als Schmiermittel Stearinsäure, Ölsäure oder Gemische davon verwendet.
Beim Flexodruck wird die Druckfarbe aus einer Farbwanne über ein Tauchwalzendruckwerk auf eine Rasterwalze aufgetragen. Etwaig überschüssige Druckfarbe wird unter Verwendung eines Rakelmessers von der Rasterwalze abgestreift. Die Rasterwalze überträgt die Druckfarbe auf einen Druckformzylinder, der sodann die Druckfarbe auf den über einen Gegendruckzylinder geführten Bedruckstoff aufbringt. Mithin wird die von der Farbwanne aufgenommene Druckfarbe auf zwei weitere Walzen übertragen, bevor die Farbe auf den Bedruckstoff aufgedruckt wird. Bei Verwendung von Metalleffektpigment-haltigen Druckfarben kommt es im Zuge der Übertragung der Druckfarbe von der Tauchwalze auf die Rasterwalze über den Druckformzylinder zu einer Abreicherung von Metalleffektpigmenten in der Druckfarbe bei jedem Druckfarbenübertrag. Im Ergebnis folgt ein unzureichender Aufdruck von Metalleffektpigmenten auf dem zu bedruckenden Substrat (schlechtes Transferverhalten).

Die in der WO 2008/077612 A2 beschriebenen Metallpigmente weisen ein schlechtes Transferverhalten auf. Bei von Flexodruck verschiedenen Anwendungen zeigen die gemäß der Lehre der WO 2008/077612 A2 durch Vermahlung erhaltenen Aluminiumeffektpigmente hingegen optische Eigenschaften auf, die den durch physikalische Dampfabscheidung (PVD: Physical Vapor Deposition) erhaltenen Pigmenten sehr nahe kommen. Die mittlere Größe d₅₀ der aus der WO 2008/077612 A2 bekannten Pigmente liegt äußerst bevorzugt in einem Bereich von 15 bis 25 µm. Diese Pigmente eignen sich allgemein zur Verwendung in Coatings, Lacken, Druckfarben, Pulverlacken, etc..

Aus der EP 2 128 204 A1 ist ein Metalleffektpigment mit Additiv bekannt, wobei das Additiv zumindest teilweise auf dem Metalleffektpigment aufgebracht ist und als Struktureinheiten wenigstens eine Carbonsäure mit wenigstens vier Kohlenstoffatomen sowie wenigstens einen Polyglykolether umfasst, wobei die Carbonsäure und der Polyglykolether kovalent miteinander verbunden sind.

Das Additiv eignet sich insbesondere als Schmiermittel bei der Herstellung von Metalleffektpigmenten aus Metallpartikeln durch Vermahlen.

Die aus der EP 2 128 204 A1 bekannten Metalleffektpigmente weisen eine mittlere Größe d₅₀ in einem Bereich von 1 bis 200 µm, äußerst bevorzugt von 5 bis 100 µm, auf. Die mittlere Dicke h₅₀ liegt in einem Bereich von 15 nm bis 5 µm, äußerst bevorzugt von 70 bis 150 nm. Die Metalleffektpigmente eignen sich insbesondere zur Verwendung in Druckfarben.

Es hat sich gezeigt, dass für den Inkjetdruck geeignete Metalleffektpigmentpräparationen beim Flexodruck zu Problemen führen. Insbesondere sind die hiermit erzielbaren Spaltfestigkeiten der erhaltenen Druckschichten nicht befriedigend.

Der vorliegenden Erfindung liegt mithin die Aufgabe zugrunde, eine Metalleffektpigmentpräparation bereitzustellen, die bei Verwendung in einer Flexodruckfarbe zu einem hervorragenden Übertrag der Metalleffektpigmente von der Tauchwalze über die Rasterwalze zu dem Druckformzylinder und schließlich auf das zu bedruckende Substrat erlaubt. Weiterhin soll der Flexodruck eine gute Spaltfestigkeit aufweisen und dem Betrachter vorzugsweise einen sehr hohen Metallglanz mit dem Aussehen eines flüssigen Metallfilms vermitteln. Die Verwendung der erfindungsgemäßen Metalleffektpigmentpräparation in einer Flexodruckfarbe soll zu einer sehr guten Deckfähigkeit führen.

Die der Erfindung zugrunde liegende Aufgabe wird durch Bereitstellung einer Pigmentpräparation mit Metalleffektpigmenten gelöst, wobei die Pigmentpräparation Metalleffektpigmente, deren mittlere Größe d₅₀ in einem Bereich von 1,7 bis 2,8 µm und deren mittlere Dicke h₅₀ in einem Bereich von 15 bis 50 nm liegt, sowie wenigstens eine Polycarbonsäure enthält.

Bevorzugte Weiterbildungen der Erfindung sind in den Unteransprüchen 2 bis 12 angegeben.

Erfindungsgemäß wird unter dem Begriff "Metalleffektpigment" bzw. "Metalleffektpigmente" verstanden, dass die Metallpigmente flächig sind. Metalleffektpigmente wirken aufgrund ihrer flächigen Struktur wie winzige Spiegel, die einfallendes Licht gerichtet reflektieren.

Unter einer flächigen Struktur wird verstanden, dass das Verhältnis von mittlerer Größe d₅₀, d.h. dem mittleren Durchmesser der Metalleffektpigmente, zu der mittleren Dicke h₅₀ der Metalleffektpigmente wenigstens 34 beträgt. Vorzugsweise liegt das Verhältnis der mittleren Dicke d₅₀ zu h₅₀, das auch als Formfaktor bezeichnet wird, in einem Bereich von 34 bis 200, weiter vorzugsweise von 40 bis 150, noch weiter bevorzugt von 50 bis 110.

Die erfindungsgemäße Pigmentpräparation enthält ausschließlich Metalleffektpigmente, deren mittlere Größe d₅₀ in einem Bereich von 1,7 bis 2,8 µm und deren mittlere Dicke h₅₀ in einem Bereich von 15 bis 50 nm liegt. Neben der wenigstens einen Polycarbonsäure können selbstverständlich weitere Komponenten enthalten sein, beispielsweise Additive.

Auch wenn die Metalleffektpigmente vorzugsweise durch Naßvermahlung erhaltene Metalleffektpigmente sind, gelten die Größenangaben, beispielsweise d₁₀₋, d₅₀- und d₉₀-Werte, Dickenangaben, beispielsweise h₅₀-Werte, und Mengenangaben dahingehend, dass die Größen, Dicken und Mengen sämtlicher Metalleffektpigmente, unabhängig von bevorzugten Varianten, jeweils auch innerhalb der ursprünglich angegebenen Bereiche, beispielsweise bezüglich Größe, Dicke und/oder Mengen, etc., liegen.

Die Erfinder haben überraschenderweise festgestellt, dass eine Pigmentpräparation, deren mittlere Größe, mithin der mittlere Durchmesser der Metalleffektpigmente, in einem äußerst engen Bereich von 1,7 bis 2,8 µm liegt und wobei die mittlere Dicke h₅₀ dieser Pigmente in einem engen Bereich von 15 bis 50 nm liegt, sich zur Verwendung beim Flexodruck sehr eignen, wenn die Pigmentpräparation zusätzlich wenigstens eine Polycarbonsäure enthält.

Eine Flexodruckfarbe, die die erfindungsgemäße Pigmentpräparation enthält, erlaubt überraschenderweise einen im Wesentlichen vollständigen, vorzugsweise vollständigen, Übertrag oder Transfer von Metalleffektpigmenten von der in eine Farbwanne eingetauchten Tauchwalze über die Rasterwalze zum Druckformzylinder und schließlich auf den Bedruckstoff oder das Substrat. Der Bedruckstoff oder das Substrat wird dabei vorzugsweise über einen Gegendruckzylinder geführt, der mit dem Druckformzylinder während des Bedruckvorganges zusammenwirkt. Kennzeichnend für das Flexodruckverfahren ist mithin, dass die zu verdruckende Flexodruckfarbe über mehrere Walzen, Rollen oder Zylinder übertragen wird, bevor die Flexodruckfarbe verdruckt wird. Um einen qualitativ hochwertigen Flexodruck zu erhalten, ist es erforderlich, dass sämtliche Komponenten einer Flexodruckfarbe von einer Walze, Rolle oder einem Zylinder auf die jeweils nächste Walze, Rolle oder nächsten Zylinder übertragen wird, so dass es zu keiner Abreicherung einer Komponente in der Flexodruckfarbe während des Druckvorganges kommt.

Für die Erfinder war überraschend, dass einerseits ein im Wesentlichen vollständiger, vorzugsweise vollständiger, Übertrag oder Transfer der Flexodruckfarbe einschließlich der Metalleffektpigmente von einer Walze auf die nächste erfolgt. Des Weiteren war für die Erfinder überraschend, dass, obgleich die Metalleffektpigmente eine doch sehr geringe mittlere Größe d₅₀ von lediglich 1,7 bis 2,8 µm aufweisen, gleichwohl auf dem Bedruckstoff oder Substrat ein stark spiegelnder Druck aufgebracht werden kann und im Wesentlichen keine, vorzugsweise keine, Streulichteffekte auftreten. Vorzugsweise weist die verdruckte Pigmentpräparation einen sehr hohen Metallglanz mit dem Aussehen eines flüssigen Metallfilms auf.

Im Unterschied zu den im Flexodruck herkömmlicherweise verwendeten Metalleffektpigmenten mit durchschnittlichen Größen d₅₀ von mehr als 6 µm, üblicherweise von mehr als 10 µm, ist die zur Reflexion von einfallendem Licht vorhandene Spiegelfläche bei den in der erfindungsgemäßen Pigmentpräparation enthaltenen Metalleffektpigmenten wesentlich geringer. Ferner ist im Unterschied zu herkömmlichen Metalleffektpigmenten bei der erfindungsgemäßen Pigmentpräparation der Anteil an Pigmentkanten in Bezug auf die zur Spiegelung von einfallendem Licht geeignete Pigmentfläche höher. Bei einem höheren Kantenanteil erwartet der Fachmann eine stärkere Streuung von einfallendem Licht und mithin ein verringertes Reflexionsvermögen.

Überraschenderweise hat sich herausgestellt, dass die erfindungsgemäße Pigmentpräparation nach dem Verdrucken mittels Flexodruck einen hervorragenden Spiegelglanz und eine vernachlässigbare Streuung von einfallendem Licht bewirkt.

Obgleich die Ursache für diesen erstaunlichen Effekt nicht feststeht, wird vermutet, dass aufgrund des nahezu vollständigen, bevorzugt vollständigen, Übertrags von Metalleffektpigmenten während des Verdruckvorganges aus der Flexodruckfarbe bis zum Bedruckstoff oder Substrat sich die Metalleffektpigmente nach dem Verdrucken mit der Spiegelfläche im Wesentlichen parallel zum Untergrund des Bedruckstoffes oder Substrates ausrichten, wobei sich die Metalleffektpigmente so aneinander bzw. übereinander anordnen, dass die freien Kanten abgedeckt oder verdeckt sind und mithin überwiegend, vorzugsweise vollständig, nicht mehr als Streuzentren für einfallendes Licht wirken.

Dieser vermutete Effekt wird vermutlich durch die äußerst geringe Größenverteilung der Metalleffektpigmente mit einer mittleren Größe d₅₀ von 1,7 bis 2,8 µm begünstigt. Aufgrund der äußerst geringen Größenverteilung weisen die erfindungsgemäß zu verwendenden Metalleffektpigmente bei dem Flexodruckverfahren ein sehr ähnliches Übertragungs- oder Transferverhalten von einer Walze auf die nächste auf. Des Weiteren wird vermutet, dass aufgrund der geringen mittleren Dicke h₅₀ die erfindungsgemäß zu verwendenden Metalleffektpigmente nach dem Aufbringen auf dem Bedruckstoff oder Substrat sich ohne wesentliche Störungen aneinander und/oder übereinander anordnen bzw. anschmiegen können, wodurch Streulichteffekte an Pigmentkanten vermieden bzw. unterdrückt werden.

Ohne an diese vorstehenden Vermutungen gebunden sein zu wollen, haben die Erfinder überraschenderweise festgestellt, dass außerhalb des von den Erfindern aufgefundenen Größen- und Dickenbereiches der zu verwendenden Metalleffektpigmente sich das Übertragungs- bzw. Transferverhalten im Flexodruck verschlechtert. Des Weiteren ist auch der Spiegelglanz nach dem Verdrucken beeinträchtigt, wenn die Metalleffektpigmente im Hinblick auf die mittlere Größe d₅₀ und die mittlere Dicke h₅₀ außerhalb der angegebenen Bereiche liegen.

Bei den Metalleffektpigmenten kann es sich sowohl um PVD-Pigmente, mithin um durch physikalische Dampfabscheidung (PVD: Physical Vapour Deposition) erhaltene Pigmente, als auch um durch Vermahlung von Metallgrieß erhaltene Metalleffektpigmente handeln.

PVD-Metalleffektpigmente werden hergestellt, indem Metalldampf auf ein, üblicherweise linear bewegliches, Substrat aufgedampft wird. Nach Erhalt eines Metallfilmes mit einer definierten Dicke wird der Metallfilm von dem Substrat, auf dem üblicherweise eine Trennschicht angeordnet ist, abgelöst. Nach dem Ablösen des Metallfilmes, beispielsweise indem das mit dem Metallfilm bedampfte Substrat durch ein Lösungsmittel-haltiges Bad geführt wird, kann der abgelöste Metallfilm zu Metallpigmenten mit einer gewünschten mittleren Größe zerkleinert werden. Dies geschieht in der Regel durch Einwirkung eines scherenden Mahlwerks, wie z.B. ein Turrax -Gerät. Anschließend kann eine Konzentrierung und schließlich die Einstellung auf einen bestimmten Lösemittelgehalt erfolgen. PVD-Metallpigmente kommen als Dispersion mit einem Metallgehalt von typischerweise 5 bis 20 Gew.-%, bevorzugt von 10 bis 15 Gew.-%, in den Handel. Die Metallpigmente weisen üblicherweise d₅₀-Werte von ca. 12 bis 40 µm und Dicken von 15 bis 50 nm auf. Das grundlegende Verfahren zur Herstellung ist lange bekannt und beispielsweise in der US 4,116,710 A oder US 4,321,087 A beschrieben.

Gemäß einer bevorzugten Weiterbildung der Erfindung werden die erfindungsgemäßen Metalleffektpigmente direkt durch Nassvermahlung aus Metallgrieß hergestellt. Der Metallgrieß weist im Fall von Aluminium vorzugsweise eine weitgehend sphärische, vorzugsweise sphärische, Geometrie auf.

Die erfindungsgemäß verwendeten Metalleffektpigmente können ihrem morphologischem Aussehen nach; wie es z.B. aus REM-Aufnahmen ersichtlich ist, aufgrund ihrer sehr rauen Oberflächen prinzipiell sogenannte "Cornflakes" sein. Allerdings weisen die Metallpigmente eine sehr geringe Dicke auf. Unter Cornflakes versteht man Metalleffektpigmente, die hauptsächlich durch Zerkleinerungsmahlung erhalten werden und ausgefranste Ränder und eine relativ raue Oberfläche aufweisen.

Es hat sich überraschend gezeigt, dass bei den erfindungsgemäß zu verwendenden Metalleffektpigmenten nach dem Verdrucken im Flexodruck kein von einem Betrachter merklich wahrzunehmender Unterschied zwischen Metalleffektpigmenten, die eine durch das jeweils angewandte Verfahren zur Herstellung der Metalleffektpigmente bedingte unterschiedlich starke Rauigkeit der Metalleffektpigmentoberfläche aufweisen, festzustellen ist.

So ist der optische Eindruck unabhängig von den verschiedenen Typen von Metalleffektpigmenten in Bezug auf Glanz oder den bei Metalleffektpigmenten in Abhängigkeit vom Betrachtungswinkel zu beobachtenden Hell-Dunkel-Flop bei Verwendung der erfindungsgemäßen Pigmentpräparation in einer verdruckten Flexodruckfarbe. Der optische Eindruck in Bezug auf Glanz ist mithin auch bei den als "Cornflakes" bezeichneten Metalleffektpigmenten nach dem Verdrucken im Flexodruck jeweils hervorragend.

Mithin ist erstaunlich, dass die Oberflächenrauigkeit bei Metalleffektpigmenten, deren mittlere Größe d₅₀ in einem Bereich von 1,7 bis 2,8 µm und deren mittlere Dicke h₅₀ in einem Bereich von 15 bis 50 nm liegt, im Hinblick auf die optische Wahrnehmung eines mittels Flexodruck bedruckten Substrates durch einen Beobachter ohne große Relevanz ist. Die vorliegende Erfindung ermöglicht folglich, dass die Verwendung von PVD-Metalleffektpigmenten, die eine absolut planare Oberfläche und mithin den größten Spiegelglanz aufweisen, bei der erfindungsgemäß bevorzugten Verwendung im Flexodruck nicht zwingend erforderlich ist. Somit können im Flexodruck auch preisgünstigere Metalleffektpigmente, die durch Zerkleinerungs- und Verformungsmahlung erhalten wurden, verwendet werden, sofern diese innerhalb des vorstehend angegebenen Größen- und Dickenbereiches liegen, ohne dass dies für den Betrachter eines mittels Flexodruck bedruckten Substrates bemerkbar ist.

Für die Erfinder war ferner überraschend, dass, obgleich die erfindungsgemäß zu verwendenden Metalleffektpigmente eine äußerst geringe mittlere Größe d₅₀ sowie eine äußerst geringe mittlere Dicke h₅₀ aufweisen, Agglomerationsprobleme nicht auftreten. Die Erfinder führen dies darauf zurück, dass als Additiv wenigstens eine Polycarbonsäure in der Pigmentpräparation enthalten ist. Es wird vermutet, dass die Polycarbonsäure über die Carboxylgruppen negative Ladungen auf die Metalleffektpigmente aufbringen und diese einer Agglomeration der Metalleffektpigmente entgegenwirken können.

Gemäß einer weiteren bevorzugten Ausführungsform weisen die Metalleffektpigmente eine mittlere Dicke h₅₀ aus einem Bereich von 20 bis 40 nm, weiter bevorzugt von 25 bis 38 nm, auf.

Die mittlere Dicke der erfindungsgemäßen Metalleffektpigmente wird dabei mittels einer Zählung von mindestens 70, bevorzugt von ca. 100 Pigmentteilchen mit REM bestimmt. Eine dafür geignete Methode der Probenpräparation und der Auswertung ist ausführlich in den Absätzen [0124] bis [0128] der EP 1 613 702 B1 beschrieben, die hiermit unter Bezugnahme aufgenommen wird. Anhand der so ermittelten Summenhäufigkeitsverteilung der gemessenen Pigmentdicken läßt sich der h₅₀-Wert beispielsweis mittels der "Quantil"-Funktion in excel berechnen.

Weiterhin ist bevorzugt, dass die erfindungsgemäßen Metalleffektpigmente eine mittlere Größe d₅₀ aus einem Bereich von 1,9 bis 2,8 µm, weiter bevorzugt von 2,1 bis 2,8 µm, aufweisen.

Als sehr geeignet hat sich ein Größenbereich der mittleren Größe d₅₀ von 2,3 bis 2,7 µm, noch weiter bevorzugt von 2,4 bis 2,6 µm, erwiesen.

Als ein ebenfalls besonders bevorzugter mittlerer Größenbereich d₅₀ der erfindungsgemäßen Metalleffektpigmente hat sich der Bereich von 2,1 bis 2,6 µm erwiesen. Mit Metalleffektpigmenten, insbesondere Aluminiumeffektpigmenten, in diesem Größenbereich wurde eine unerwartet hohe Spaltfestigkeit der verdruckten Farbe bei gleichzeitig sehr guten weiteren Eigenschaften wie Glanz, Deckfähigkeit und geringer Körnigkeit im Flexodruck erhalten. Diese Eigenschaften bewirken den erwünschten optischen Effekt eines flüssigen Metallfilmes ("liquid metal effect").

Unter der "mittleren" Größe des Durchmessers wird dabei der d₅₀-Wert der Summenhäufigkeitsverteilung der volumengemittelten Größenverteilungsfunktion verstanden.

Eine Größenverteilungsfunktion läßt sich durch bestimmte Maßzahlen charakterisieren: d₁₀ (Maß für Feinanteil), d₅₀ (Mittelwert) und d₉₀ (Maß für den Grobanteil).

Der d₁₀-, d₅₀- bzw. d₉₀-Wert der Summenhäufigkeitsverteilung der volumengemittelten Größenverteilungsfunktion, wie sie durch Laserbeugungsmethoden erhalten wird, gibt an, dass 10%, 50% bzw. 90% der Pigmente einen Durchmesser aufweisen, der gleich oder kleiner als der jeweils angegebene Wert ist. Im Fall von plättchenförmigen Metalleffektpigmenten wird hierbei die Größenverteilung mittels mittels Lasergranulometrie gemäß Herstellerangaben gemessen, vorzugsweise mit dem Malvern Mastersizer 2000 Application Firmware Version: 1.06 der Firma Malvern Instruments Ltd..

Erfindungsgemäß ist weiterhin bevorzugt, dass das Metalleffektpigment Metall, das aus der Gruppe, die aus Aluminium, Aluminiumlegierungen, Kupfer, Kupferlegierungen und Messing und Eisen besteht, ausgewählt wird, enthält oder daraus besteht.

Vorzugsweise enthält das Metalleffektpigment Metall, das aus der Gruppe, die aus Aluminium, Aluminiumlegierungen, Kupfer, Kupferlegierungen und Messing, ausgewählt wird, oder besteht aus diesen.

Als sehr geeignet haben sich Aluminium oder Aluminiumlegierungen erwiesen.

Gemäß einer weiteren Variante sind Kupfer und Kupferlegierungen, wie beispielsweise Messing, sehr bevorzugt. Gemäß einer bevorzugten Weiterbildung liegt das Messing, mithin eine Legierung aus Kupfer und Zink, vorzugsweise in Form von Goldbronze beispielsweise als Reichgold (ca. 30 Gew.-% Zink, ca. 70 Gew.-% Kupfer), Reichbleichgold (ca. 20 Gew.-% Zink, ca. 80 Gew.-% Kupfer) oder Bleichgold (ca. 10 Gew.-% Zink, ca. 90 Gew.-% Kupfer) vor.

Gemäß einer weiteren Variante der Erfindung, enthält die Pigmentpräparation wenigstens ein Lösemittel. Bei dem Lösemittel handelt es sich vorzugsweise um ein organisches Lösemittel.

Als sehr geeignete organische Lösemittel haben sich Alkohole und substituierte Alkohole, beispielsweise Isopropanol, Ethanol oder Methoxypropanol oder Acetate, beispielsweise Ethylacetat oder Isopropylacetat oder Mischungen dieser Lösemittel erwiesen.

Erfindungsgemäß ist es bevorzugt, dass im Wesentlichen sämtliche Oberflächen der Metalleffektpigmente mit der wenigstens einen Polycarbonsäure versehen sind. Vorzugsweise sind sämtliche Oberflächen der Metalleffektpigmente mit der wenigstens einen Polycarbonsäure versehen. Die wenigstens eine Polycarbonsäure ist dabei direkt auf die Oberflächen der Metalleffektpigmente aufgebracht. Die wenigstens eine Polycarbonsäure kann physikalisch und/oder chemisch an der Oberfläche des Metalleffektpigmentes gebunden sein.

Die erfindungsgemäß zu verwendende wenigstens eine Polycarbonsäure wird vorzugsweise während der Vermahlung oder Verformung von Metallgrieß oder bei der Zerkleinerung von größeren Metalleffektpigmenten auf die Pigmentoberfläche aufgebracht.

Mithin sind die Oberflächen der Metalleffektpigmente vorzugsweise vollständig mit der wenigstens einen Polycarbonsäure bedeckt. Die wenigstens eine Polycarbonsäure bewirkt zum einen Schutz gegen etwaige korrosive Einflüsse, beispielsweise nach dem Verdrucken der Pigmentpräparation in einer Flexodruckfarbe auf ein zu bedruckendes Substrat.

Zum anderen wirkt die im Wesentlichen auf sämtlichen Oberflächen der Metalleffektpigmente aufgebrachte wenigstens eine Polycarbonsäure als Dispergierhilfsmittel. Wie vorstehend ausgeführt, wird vermutet, dass die negativen Ladungen der Carboxylgruppe bzw. Carbonsäuregruppe einer Agglomeration von Metalleffektpigmenten entgegenwirken. Darüber hinaus wird vermutet, dass auch sterische Effekte der Polycarbonsäure einer Agglomeration der Metalleffektpigmente in der erfindungsgemäßen Pigmentpräparation entgegenwirken.

Gemäß einer weiteren Variante der Erfindung weist die wenigstens eine Polycarbonäure wenigstens vier Kohlenstoffatome auf und ist vorzugsweise mit wenigstens einem Polyglykolether kovalent verbunden.

Es hat sich überraschenderweise gezeigt, dass die wenigstens eine Polycarbonsäure mit wenigstens 4 Kohlenstoffatomen, die vorzugsweise mit wenigstens einem Polyglykolether kovalent verbunden ist, sich hervorragend als Schmiermittel eignet, welches bei der Herstellung der Metalleffektpigmente durch mechanische Verformung von Metallgrieß erforderlich ist, um eine Kaltverschweißung der verformten Pigment zu verhindern. Überraschenderweise können die, vorzugsweise durch mechanische Verformung erhaltenen, Metalleffektpigmente zu Metallplättchen mit äußerst geringen Dicken geformt werden, die einen hohen Glanz aufweisen.

Des Weiteren eignet sich die erfindungsgemäß zu verwendende wenigstens eine Polycarbonsäure auch sehr gut als Dispergieradditiv für Metalleffektpigmente. Sofern die erfindungsgemäß Pigmentpräparation beispielsweise in Form einer Metallpigmentpaste und/oder einem Metallpigmentfilterkuchen vorliegt, können diese ohne weiteres wieder redispergiert werden. Die erfindungsgemäße Pigmentpräparation, beispielsweise in Form einer Paste, weist eine signifikant erhöhte Lagerstabilität auf.

Obgleich bislang noch nicht geklärt ist, warum das erfindungsgemäß bevorzugt verwendete Additiv aus kovalent miteinander verbundener Polycarbonsäure und Polyglykolether sowohl bei der mechanischen Verformung von Metallgrieß zu Metalleffektpigmenten eine sehr gute Schmierwirkung aufweist als auch eine verbesserte Einfügung oder Einbindung der so hergestellten Metalleffektpigmente in eine Flexodruckfarbe ermöglicht, wird vermutet, ohne dass die Erfinder dabei an diese Vermutung gebunden sein wollen, dass die sehr gute Schmierwirkung durch die Polycarbonsäure mit wenigstens 4 Kohlenstoffatomen zusammen mit dem Polyglykolether erzeugt wird.

Es wird weiterhin vermutet, dass die Schmierwirkung durch einen synergistischen Effekt zwischen Polycarbonsäure und Polyglykolether verstärkt wird. Hier könnte durch die kovalente Bindung von Polycarbonsäure und Polyglykolether eine vorteilhafte räumliche Nähe erzeugt werden, die für die sehr gute Schmierwirkung dieses Additivs von Bedeutung sein könnte.

Die gute Einfügung oder Einbindung in ein Anwendungsmedium sowie die hohe Lagerstabilität könnte ebenfalls auf das gleichzeitige Vorhandensein und die enge räumliche Kopplung von Polycarbonsäure und Polyglykolether zurückzuführen sein. Die Polycarbonsäure(n) sind vom Charakter eher hydrophobe Moleküle, die eine große Affinität zu unpolareren organischen Lösemitteln aufweisen. Dies gilt insbesondere bei längerkettigen Polycarbonsäuren. Die Polyglykolether sind im Hinblick auf die in den Kohlenwasserstoffketten enthaltenen Sauerstoffatome eher polarer Natur und mithin hydrophile Moleküle. Sie besitzen eine sehr gute Löslichkeit in einer Vielzahl von polaren und auch unpolaren Solventien. Insbesondere sind sie gut wasserlöslich und sind daher auch oft in Tensiden für wässrige Anwendungen zu finden. Durch die Kombination von hydrophoben und hydrophilen Eigenschaften können die erfindungsgemäßen Metalleffektpigmente sowohl mit hydrophoben als auch mit hydrophilen Komponenten von Anwendungsmedien in Wechselwirkung treten, weshalb die erfindungsgemäßen Metalleffektpigmente vermutlich sehr gut von einer Flexodruckfarbe umhüllt und mithin in das Anwendungsmedium eingefügt oder eingebunden werden, ohne dabei als wesentliche Störung oder als Fremdkörper zu wirken.

Die gute Einfügung oder Einbindung in das Anwendungsmedium könnte dann auch zu der festgestellten verbesserten mechanischen Beständigkeit in einer Druckfarbschicht führen. Es hat sich nämlich überraschenderweise gezeigt, dass die unter Verwendung der erfindungsgemäßen Pigmentpräparation hergestellte Flexodruckfarbe nach dem Verdrucken im Flexodruck und Härtung der verdruckten Farbe eine hohe Spaltfestigkeit aufweist. Mithin erfolgt keine Ablösung der Farbschicht entlang der Metalleffektpigmente. Herkömmliche metalleffektpigmenthaltige Farben können, da die Metalleffektpigmente störend flächige Fremdkörper sind, eine unerwünschte Spaltbarkeit entlang der angeordneten Metalleffektpigmente in der gehärteten oder getrockneten Farbe aufweisen.

Die erfindungsgemäß zu verwendenden Metalleffektpigmente besitzen vorzugsweise aufgrund der sehr geringen mittleren Dicken eine sehr hohe Deckkraft. Als Deckkraft oder Deckvermögen eines Metalleffektpigmentes wird üblicherweise die Abdeckung einer Fläche pro Gewichtseinheit an Metalleffektpigmentmenge bezeichnet. Je dünner die mittlere Dicke der Metalleffektpigmente ist, desto größer ist die durch das Pigment abgedeckte Fläche, d.h. die pro Gewichtseinheit des Metalleffektpigmentes abgedeckte Fläche, und mithin die Deckkraft des Metalleffektpigmentes.

Die geringe Dicke der Metalleffektpigmente ist beim Flexodruck von sehr großem Vorteil, da diese vermutlich auch ein Grund für das hervorragende Übertragungs- oder Transferverhalten von einer Walze, Rolle oder Zylinder auf die/den nächsten ist.

Die erfindungsgemäße Pigmentpräparation zeichnet sich durch eine außerordentliche Brillanz und ein hervorragendes spezifisches Deckvermögen aus. Beispielsweise lassen sich im Falle von Aluminiumeffektpigmenten mit den in Anspruch 1 angegebenen Größen und Dicken hochglänzende silberfarbene Flexodrucke erzeugen. Bei Verwendung von Messing- oder Goldbronzeeffektpigmenten mit den in Anspruch 1 angegebenen Größen und Dicken lassen sich im Flexodruck hochglänzende goldfarbene Beschichtungen erzeugen.

Gemäß einer bevorzugten Ausführungsform werden die erfindungsgemäß in der Pigmentpräparation zu verwendenden Metalleffektpigmente nach der mechanischen Verformung in Gegenwart der wenigstens einen Polycarbonsäure, die vorzugsweise kovalent mit wenigstens einem Polyglykolether verbunden ist, nicht weiter beschichtet. Die Metalleffektpigmente können mithin, gegebenenfalls unter Wechsel oder Entfernung des Lösemittels, direkt in das Applikationsmedium für Flexodruck eingearbeitet werden.

Selbstverständlich können die in der erfindungsgemäßen Pigmentpräparation enthaltenen Metalleffektpigmente auch weiter beschichtet und somit die Metalleffektpigmentoberfläche beispielsweise organisch-chemisch modifiziert werden.

Gemäß einer bevorzugten Ausführungsform der Erfindung sind die Metalleffektpigmente non-leafing-Pigmente. Unter non-leafing Metalleffektpigmenten wird verstanden, dass sich die Metalleffektpigmente nicht an oder in der Nähe der Oberfläche eines aufgebrachten Flexodruckfarbenfilms, d.h. auf der dem Substrat abgewandten Fläche des Flexodruckfarbenfilms, sondern sich in dem Flexodruckfarbenfilm anordnen. Die Metalleffektpigmente werden mithin von dem Flexodruckfarbenfilm, beispielsweise Bindemittel, umhüllt und bei Trocknung oder Aushärtung umschlossen oder eingebunden. Somit sind die non-leafing Metalleffektpigmente durch die Flexodruckfarbe bereits vor mechanischer oder chemischer Einwirkung geschützt.

Selbstverständlich kann auf eine mittels Flexodruck aufgebrachte Beschichtung auf Basis der erfindungsgemäßen Pigmentpräparation auch noch eine Schutzschicht, beispielsweise ein Klarlack, aufgebracht werden.

Den Metalleffektpigmenten in der erfindungsgemäßen Pigmentpräparation kann auch leafing-Verhalten verliehen werden, beispielsweise indem auf die Pigmentoberfläche zusätzlich gesättigte Fettsäuren mit mindestens 12 C-Atomen, bevorzugt Palmitinsäure oder Stearinsäure, aufgebracht wird.

Die erfindungsgemäß bevorzugt zu verwendende wenigstens eine Polycarbonsäure mit kovalent verbundenem wenigstens einen Polyglykolether ist durch Umsetzung von Polycarbonsäure und Polyglykolether erhältlich.
Dabei findet die Umsetzung von Polycarbonsäure und Polyglykolether bevorzugt durch Veresterung und/oder Amidierung statt.

Besonders bevorzugt erfolgt dabei die kovalente Verknüpfung von Polyglykolether mit der Polycarbonsäure durch eine Veresterung. Es werden hierbei Polycarbonsäurefunktionen teilweise mit dem Polyglykolether verestert. Beispielsweise können Polycarbonsäure und Polyglykol durch herkömmliche Veresterungsreaktion, beispielsweise durch Temperaturerhöhung und Wasserentzug, miteinander umgesetzt werden. Die Bedingungen solcher Veresterungsreaktionen sind dem Fachmann bekannt und auch beispielsweise in der EP 1 304 210 A1 oder der DE 24 36 902 beschrieben, die hiermit unter Bezugnahme aufgenommen sind.

Die Veresterungsgrade liegen hierbei bevorzugt bei 10 % bis 90 %, weiter bevorzugt bei 20 % bis 80 % und besonders bevorzugt bei 25 % bis 75 %. Gemäß einer bevorzugten Weiterbildung der Erfindung erfolgt mithin eine unvollständige Veresterung der Carbonsäuregruppen der Polycarbonsäure, so dass wenigstens teilweise nach der Veresterungsreaktion noch freie Carbonsäuregruppen, vorzugsweise wenigstens eine freie Carbonsäuregruppe pro Polycarbonsäuremolekül vorliegt. Vorzugsweise liegen etwa 50% bis maximal 75% der Carbonsäuregruppen als freie Carbonsäuregruppen vor.

Gemäß einer weiteren Ausführungsform ist die Polycarbonsäure gesättigt oder ungesättigt. Dabei sind jedoch gesättigte Polycarbonsäuren bevorzugt, da sie eine längere Lagerstabilität bewirken.

Die Polycarbonsäure weist bevorzugt 6 bis 130 Kohlenstoffatome, weiter bevorzugt 8 bis 100 Kohlenstoffatome, besonders bevorzugt 10 bis 96 Kohlenstoffatome, und ganz besonders bevorzugt 20 bis 80 Kohlenstoffatome auf. Dabei bezieht sich diese Anzahl der Kohlenstoffatome auf das Kohlenwasserstoffgrundgerüst der Polycarbonsäuren einschließlich der Carboxylatfunktionen, jedoch nicht auf die Polyglykolethereinheiten.

Unterhalb von 4 Kohlenstoffatomen bei der Polycarbonsäure sind die vorteilhaften Wirkungen in Verbindung mit dem Metallpigment nicht erkennbar. Oberhalb von 130 C-Atomen wird die Polycarbonsäure zunehmend in den meisten Lösemitteln unlöslich.

Die Polycarbonsäure kann aus Monocarbonsäuren hergestellt sein.
Als bei der vorliegenden Erfindung geeignete Monocarbonsäuren zur Herstellung der wenigstens einen Polycarbonsäure mit wenigstens 4 Kohlenstoffatomen, die vorzugsweise kovalent mit Polyglykolether kovalent verbunden ist, haben sich gesättigte Fettsäuren erwiesen. Vorzugsweise werden Fettsäuren mit 6 bis 30 Kohlenstoffatomen, weiter bevorzugt mit 10 bis 24 Kohlenstoffatomen, noch weiter bevorzugt mit 14 bis 22 Kohlenstoffatomen verwendet. Es können auch Mischungen verschiedener Monocarbonsäuren verwendet werden, in diesem Fall sind die vorstehend genannten Werte für die Anzahl der Kohlenstoffatome als Mittelwerte der Mischung mehrerer Monocarbonsäuren zu verstehen.

Vorzugsweise werden die Monocarbonsäuren zur Herstellung der Polycarbonsäure aus der Gruppe ausgewählt, die aus Valeriansäure, Capronsäure, Önanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure, Behensäure, Lignocerinsäure, Cerotinsäure, Melissinsäure und Mischungen dieser Fettsäuren besteht.

Als Monocarbonsäuren mit wenigstens 4 Kohlenstoffatomen können erfindungsgemäß auch ungesättigte Fettsäuren verwendet werden. Vorzugsweise werden ungesättigte Fettsäuren mit 6 bis 30 Kohlenstoffatomen, weiter bevorzugt mit 10 bis 24 Kohlenstoffatomen, noch weiter bevorzugt mit 14 bis 22 Kohlenstoffatomen verwendet.

Die ungesättigten Monocarbonsäuren zur Herstellung der Polycarbonsäure können beispielsweise aus der Gruppe ausgewählt werden, die aus Undecylensäure, Palmitoleinsäure, Ölsäure, Elaidinsäure, Vaccensäure, Icosensäure, Cetoleinsäure, Erucasäure, Nervonsäure, Sorbinsäure, Linolsäure, Linolensäure, Elaeostearinsäure, Arachidonsäure, Timnodonsäure, Clupanodonsäure, Docosahexaensäure und Mischungen dieser Fettsäuren besteht.

Gemäß einer weiteren bevorzugten Ausführungsform werden als Polycarbonsäuren Dicarbonsäuren, Tricarbonsäuren, Tetracarbonsäuen oder deren Mischungen verwendet. Als Di- und/oder Tricarbonsäuren, die mit Polyglykolether kovalent kovalent verbunden werden können, können ebenfalls gesättigte und/oder ungesättigte Polycarbonsäuren verwendet werden.

Beispielsweise können als Dicarbonsäuren Bernsteinsäure, Glutarsäure, Adipinsäure, Pimelinsäure, Korksäure, Azelainsäure und/oder Sebacinsäure verwenden werden.

Gemäß einer besonders bevorzugten Weiterbildung der Erfindung werden Di-, Tri- oder Tetracarbonsäuren mit längeren Kohlenstoffgerüsten verwendet. Diese Di-, Tri- oder Tetracarbonsäuren werden bevorzugt durch Di-, Tri- oder Tetramerisierung von ungesättigten Fettsäuren, wie den vorstehend angegebenen Monocarbonsäuren, erhalten. Die dafür verwendeten Fettsäuren weisen bevorzugt 11 bis 30 Kohlenstoffatome, weiter bevorzugt 12 bis 24 Kohlenstoffatome und, noch weiter bevorzugt 14 bis 22 Kohlenstoffatome auf. Zur Di-, Tri- oder Tetramerisierung geeignete ungesättigte Fettsäuren sind beispielsweise Ölsäure, Linolsäure, Linolensäure, Eleostearinsäure oder ähnlichen Säuren.
Obgleich unverzweigte Fettsäuren bevorzugt zur Herstellung der Polycarbonsäure verwendet werden, können selbstverständlich auch verzweigte Fettsäuren verwendet werden.

Besonders bevorzugt liegen die Polycarbonsäuren überwiegend in der Form der Dicarbonsäure vor.

Als sehr geeignet haben sich zur Herstellung der Polycarbonsäure Monocarbonsäuren mit einem Kohlenstoffgrundgerüst von 18 Kohlenstoffatomen erwiesen. Diese Dicarbonsäure weist demnach 36 C-Atome und die entsprechende Tricarbonsäure 54 C-Atome auf.

Die Verwendung von Dicarbonsäuren bei der Umsetzung mit Polyglykol und/oder Polyglykolether ist bevorzugt. Vorzugsweise erfolgt dabei nur eine Teilveresterung unter Erhalt von überwiegend Dicarbonsäuremonoglykolestern. Ein Dicarbonsäuremonoglykolester kann beispielsweise über die freie Carboxylatgruppe an die Metalleffektpigmentoberfläche binden und/oder über die negative Ladung der Carboxylatgruppe einer Agglomeration der Metalleffektpigmente entgegenwirken. Bei der Bindung an die Pigmentoberfläche handelt es sich vorzugsweise um eine kovalente Bindung.

Vorzugsweise handelt es sich bei der Polycarbonsäure um eine dimerisierte, trimerisierte oder tetramerisierte Fettsäure. Bei den Fettsäuren können die oben genannten Fettsäuren verwendet werden, die dimerisiert, trimerisiert oder tetramerisiert werden. Vorzugsweise werden Mischungen dieser verschiedenen Fettsäuren verwendet.

Gemäß diesen bevorzugten Ausführungsformen der Erfindung weist die wenigstens eine Polycarbonsäure zwei bis acht Carbonsäuregruppen auf. Weiter bevorzugt enthält die Polycarbonsäure 2 bis 4 Carbonsäuregruppen. Diese Angaben beziehen sich im Fall von Mischungen unterschiedlichster Poycarbonsäuren auf die Mittelwerte. Vorzugsweise sind etwa 50 % bis maximal 75% der Carbonsäuregruppen unverestert, mithin freie Carbonsäuregruppen.

Weiterhin ist bevorzugt, dass die Polycarbonsäure 10 bis 96, vorzugsweise 12 bis 76, Kohlenstoffatome, weiter bevorzugt 24 bis 60 Kohlenstoffatome, noch weiter bevorzugt 36 bis 54 Kohlenstoffatome, enthält. Auch hier bezieht sich die Anzahl der Kohlenstoffatome im Fall von Mischungen verschiedenster Polycarbonsäuren auf die durchschnittliche Anzahl innerhalb dieser Mischung.

Vorzugsweise wird eine dimerisierte oder trimerisierte Fettsäure verwendet, die vorzugsweise 30 bis 60 Kohlenstoffatome, weiter bevorzugt 36 bis 54 Kohlenstoffatome aufweist. Als sehr geeignet hat sich eine Dimersäure mit durchschnittlich 36 Kohlenstoffatomen erwiesen. Die Dimersäure kann dabei zu gewissen Anteilen bevorzugt auch Trimersäure oder Monosäure oder Tetramersäure enthalten.

Entsprechende Polycarbonsäuren sind kommerziell erhältlich unter den Handelsnamen Empol (Fa. Cognis, Adhesives & Sealants) oder Pripol (Fa. Unichema) oder Versadyne (Henkel Hakusui Kabushiki Kaisha).
Beispiele hierfür sind: Empol 1018, Empol 1045, Pripol 1013, Pripol 1006, Pripol 1022, Pripol 1009, Pripol 1010, Pripol 1040, Pripol 1010, Versadyme 216.

Gemäß einer bevorzugten Weiterbildung der Erfindung, umfasst der Polyglykolether die Gruppe

R¹--(R²-O)_{y}-(R³-O)_{z}-(R⁴-O)ₖ-,

wobei die R²-O-, R³-O- und die R⁴-O-Polyethereinheiten statistisch, alternierend oder als Blockcopolymere angeordnet sein können. Der Rest R¹ ist ein linearer oder verzweigter aliphatischer Rest oder araliphatischer oder aromatischer organischer Rest mit 1 bis 30 Kohlenstoffatomen. Die Reste R², R³ und R⁴ können gleich oder unabhängig voneinander verschieden sein und stehen jeweils für einen linearen oder verzweigten aliphatischen organischen Rest oder araliphatischen oder aromatischen organischen Rest mit 1 bis 12 Kohlenstoffatomen. Die Einzelpolymerisationsgrade y, z und k sind natürliche Zahlen und stehen unabhängig voneinander für 0 bis 200, mit der Maßgabe das y+z+k = 2 bis 600 ist. Die Gruppe X steht für O, S, (C=O)O, NR, wobei R gleich H oder ein aliphatischer Rest mit 1 bis 20 Kohlenstoffatomen ist. Bevorzugt ist hierbei X ein Sauerstoffatom oder eine Carboxyfunktion und besonders bevorzugt ein Sauerstoffatom.

Der zur kovalenten Verknüpfung mit der Carbonsäure verwendete Polyglykolether wird bevorzugt erhalten durch Umsetzung eines Alkohols R¹-OH, eines Thiols R¹-SH, einer Carbonsäure R¹-COOH oder eines Amins R¹NHR als Startermoleküle mit jeweils einem Überschuß an Glykolen unter geeigneten, dem Fachmann bekannten Reaktionsbedingungen.

Die erfindungsgemäß zur kovalenten Verknüpfung mit der wenigstens einen Polycarbonsäure verwendeten Polyglykolether liegen weitgehend als monofunktionelle Polyglykole vor, da diese sich in eindeutiger Weise sich mit den Carbonsäuren kovalent verknüpfen lassen. Unter "weitgehend monofunktionell" wird hier verstanden, dass sie einen Anteil von 0 bis maximal 10 % auch an bifunktionellen Polyglykolether aufweisen. In diesem Fall enthält entweder der Rest R¹ eine mit der Carbonsäure reaktionsfähige Gruppe oder statt des Restes R¹ ist ein Wasserstoffatom vorhanden. Der letztere Fall beispielsweise ist auf eine unvollständige Umsetzung der Alkohole, Thiole usw. mit den Glykolen zurückzuführen.

Der Rest R¹ ist bevorzugt ein linearer oder verzweigter aliphatischer Rest oder araliphatischer oder aromatischer organischer Rest mit 2 bis 16 Kohlenstoffatomen und besonders bevorzugt ein aliphatischer Rest mit 1 bis 12 C-Atomen.

Die Reste R², R³ und R⁴ weisen bevorzugt unabhängig voneinander 2 bis 8 C-Atome und besonders bevorzugt 2 bis 4 C-Atome auf.
Besonders bevorzugt handelt es sich bei den Resten R², R³ und R⁴ unabhängig voneinander um Ethyl, iso-Propyl, Propyl oder Butyl. Weiter besonders bevorzugt sind alternierende oder blockcopolymerartige Ethyl-, iso-Propyl-Einheiten, sogenannte EO/PO- Polyether.

Die Länge der Ethereinheiten y+z+k ist bevorzugt 5 bis 300, weiter bevorzugt 7 bis 100 und besonders bevorzugt 10 bis 50.

Bei zu langen Ethereinheiten kann die Affinität der wenigstens einen Polycarbonsäure, die mit dem wenigstens einen Polyglykolether kovalent verbunden ist, zur Metalleffektpigmentoberfläche abnehmen. In diesem Fall könnte es passieren, dass insbesondere in einer Paste oder einem fertigen Applikationsmedium einer Flexodruckfarbe, die wenigstens eine Polycarbonsäure, die mit dem wenigstens einen Polyglykolether kovalent verbunden ist, sich vom Metalleffektpigment löst oder ggf. nicht ausreichend an die Pigmentoberfläche während des Mahlvorganges bindet.

Beispiele geeigneter mit der wenigstens einen Polycarbonsäure kovalent verbindbaren Polyglykolether sind Methoxypolyethylenglycole, Butoxypolyethylenglycole, Methoxypolypropylenglycole oder Butoxypolypropylenglycole.

Vor der Ankopplung an die wenigstens eine Polycarbonsäure weist der wenigstens eine Polyglykolether bzw. das Polyglykol üblicherweise ein Wasserstoffatom oder eine Aminfunktion oder ein Epoxid an dem offenen Ende der vorstehend gezeigten Strukturformeln auf.
Mithin sind vor der Umsetzung mit der Carbonsäure folgende Moleküle bevorzugt:

R¹--(R²-O)_{y}-(R³-O)_{z}-(R⁴-O)ₖ-H (Bildung eines Esters)

R¹-X-(R²-O)_{y}-(R³-O)_{z}-(R⁴-O)ₖNR⁵R⁶ (Bildung eines Amids)

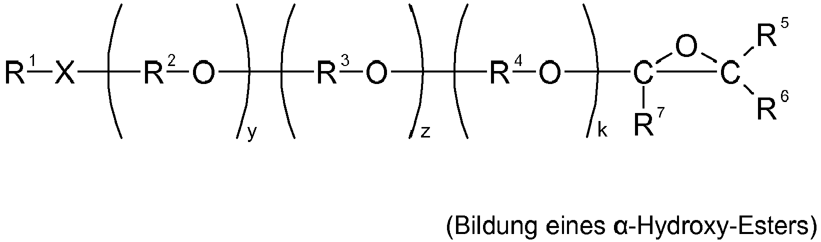

Bei den vorstehenden Strukturformeln sind R⁵, R⁶ und R⁷ unabhängig voneinander vorzugsweise H oder ein verzweigter oder unverzweigter Kohlenstoffrest mit 1 bis 6 Kohlenstoffatomen. Vorzugsweise ist der Kohlenstoffrest ein linearer Alkylrest mit 1 bis 6 Kohlenstoffatomen. Die Kohlenstoffreste R⁵, R⁶ und R⁷ können unabhängig voneinander gesättigt oder ungesättigt sein. Beispielsweise können R⁵, R⁶ und R⁷ unabhängig voneinander für Phenylrest stehen. Besonders bevorzugt sind R⁷ und R⁵ ein H und R⁶ ein H oder Methyl.

Nach Umsetzung des Polyglykolethers mit der Carbonsäure erfolgt vorzugsweise eine kovalente Kopplung über das endständige Sauerstoffatom.

Gemäß einer weiteren Variante ist die Carbonsäure teilweise oder vollständig verestert bzw. amidiert.

Es hat sich überraschend gezeigt, dass es besonders vorteilhaft ist, wenn nur ein Teil der Carboxylgruppen verestert ist, mithin die wenigstens eine Polycarbonsäure(n), als Partialester vorliegen. Vorzugsweise sind mindestens 10 % und maximal 90 % der Carboxylgruppen verestert. Weiterhin bevorzugt sind etwa 15 bis 80 %, noch weiter bevorzugt etwa 20 bis 70 % der Carboxylgruppen verestert. Die nicht veresterten Carbonsäuregruppen bzw. Carboxylgruppen liegen mithin als freie Carbonsäuregruppen bzw. freie Carboxylgruppen vor.

Äußerst bevorzugt sind etwa 50 % der Carbonsäuregruppen pro Polycarbonsäuremolekül verestert. Somit liegen vorzugsweise etwa 50 % bis maximal 75% der Carbonsäuregruppen pro Polycarbonsäuremolekül als freie Carboxylgruppen bzw. Carbonsäuregruppen vor.

Zur Kopplung an die Metalleffektpigmentoberfläche werden vorzugsweise nur einige Carboxylgruppen in dem Additiv aus wenigstens einer Polycarbonsäure, die vorzugsweise mit wenigstens einem Polyglykolether kovalent verbunden ist, benötigt.

Es hat sich gezeigt, dass sich die Lagerstabilität sowie die mechanischen Eigenschaften, insbesondere die Spaltfestigkeit, einer getrockneten oder gehärteten Flexodruckfarbe, verbessern, wenn die wenigstens eine Polycarbonsäure(n) als Partialester vorliegen.

Mithin liegt bei dieser bevorzugten Variante noch ein Teil der wenigstens einen Polycarbonsäure mit freien Carboxylfunktionen vor. Es wird vermutet, dass die Additive mit derartigen Carboxylfunktionen der erfindungsgemäßen Mischung besonders gut an die Metallpigmentoberfläche anzubinden vermögen.

Die wenigstens eine Polycarbonsäure weist nach der kovalenten Verbindung mit dem wenigstens einen Polyglykolether bevorzugt Säurezahlen von 5 bis 140 KOH/g Additiv, weiter bevorzugt 6 bis 100 mg KOH/g Additiv und besonders bevorzugt von 8 bis 50 KOH/g Additiv auf. Diese Säurezahlen werden bevorzugt nach der DIN 53402 ermittelt.

Gemäß einer weiteren Variante der Erfindung erfolgt die kovalente Kopplung von der wenigstens einen Polycarbonsäure und Polyglykolether nicht über eine Veresterung oder eine Amidierung der Carboxylfunktionalitäten der Carbonsäure.

Bei dieser Variante weist beispielsweise die wenigstens eine Polycarbonsäure eine oder mehrere Hydroxyfuntionen (beispielsweise Weinsäure) auf und wird mit einem Polyglykolether, der eine endständige Epoxidgruppe aufweist, umgesetzt. Bei der Polycarbonsäure werden die freien Carboxylfunktionen durch geeignete Schutzgruppen geschützt, so dass keine Umsetzung mit der Epoxidgruppe erfolgt und so dass der Polyglykolether mittels seiner Epoxyfunktion mit der Hydroxyfunktion(en) der Polycarbonsäure unter Ausbildung einer α-Hydroxyetherbindung kovalent verknüpft wird.

Gemäß einer weiteren Variante der Erfindung können die wenigstens eine Polycarbonsäure und der wenigstens eine Polyglykolether über einen Kohlenwasserstoffrest miteinander gekoppelt sein. Dieser Kohlenwasserstoffrest kann gesättigt oder ungesättigt sein und umfaßt vorzugsweise 2 bis 100 C-Atome. Weiterhin ist bevorzugt, dass der Kohlenwasserstoffrest, 4 bis 50, noch weiter bevorzugt, 6 bis 20, Kohlenstoffatome umfasst. Äußerst bevorzugt weist der Kohlenwasserstoffrest eine Kettenlänge im Bereich von 2 bis 10 Kohlenstoffatome auf. Der Kohlenwasserstoffrest kann Sauerstoffatome enthalten und/oder substituiert sein. Der Kohlenwasserstoffrest ist vorzugsweise geradkettig, kann aber auch verzweigt sein. Um eine kovalente Verbindung von Carbonsäure und Polyglykolether zu bewirken, werden diese mit einem bifunktionellen reaktiven Kohlenwasserstoff umgesetzt. Bei den reaktiven organischen Gruppen können die oben genannten reaktiven organischen Gruppen verwendet werden, die über eine Abstandsgruppe (Spacer) miteinander verbunden sind. Bei der Abstandsgruppe kann es sich um einen Alkylrest oder einen Alkoxyalkylrest mit der vorstehend angegebenen Anzahl an Kohlenstoffatomen handeln. Gemäß einer bevorzugten Variante werden Diglycidylverbindungen, vorzugsweise Diglycidylether, verwendet.

Bei bevorzugten Ausführungsformen weisen die wenigstens eine Polycarbonsäure, die mit wenigstens einem Polyglykolether kovalent verbunden ist, ein vorgegebenes Verhältnis von hydrophilen Polyetherresten und hydrophoben Kohlenwasserstoffgerüsten der Polycarbonsäure(n) auf. Beispielsweise beträgt das Verhältnis der Länge der Polyethereinheiten y+z+k (Polymerisationsgrad) zur Zahl der Kohlenstoffatome der Polycarbonsäure bevorzugt 0,1 bis 4,0, weiter bevorzugt 0,15 bis 3,0, besonders bevorzugt 0,2 bis 2,0 und ganz besonders bevorzugt 0,25 bis 1,0.

Unterhalb eines Verhältnisses von 0,1 kann es sein, dass die Polyethereinheit keine Wirkung mehr entfaltet. Oberhalb von einem Verhältnis von 4,0 können ebenfalls keine Vorteile mehr beobachtbar sein. In diesem Fall kann es sein, dass die wenigstens eine Polycarbonsäure, die mit dem Polyglykolether kovalent verbunden ist, nicht mehr zuverlässig an die Metalleffektpigmentoberfläche gebunden ist bzw. wird.

Gemäß einer weiteren Variante können die Polycarbonsäuren auch teilweise mit monofunktionellen Alkoholen verestert sein. Der Veresterungsgrad der monofunktionellen Alkohole beträgt bevorzugt 0 bis 50 % der vorhandenen Carbonsäurefunktionen. Die monofunktionellen Alkohole enthalten einen Kohlenwasserstoffrest mit 1 bis 20 C-Atomen. Der Kohlenwasserstoffrest kann geradkettig oder verzweigt sein und gesättigt oder ungesättigt sein. Beispiele geeigneter Alkohole sind: Isopropanol, Butanol, t-Butanol, Amylalkohol, Isoamylalkohohl n-Hexanol, 2-Ethylhexan, Myristylalkohol, n-Octanol, Isooctanol, Isodecanol, Caprylalkohol, Laurylalkohol, Stearylakohol, Tridecylalkohol, Hexadecylakohol sowie Mischungen dieser Alkohole.

Vorzugsweise liegt das mittlere Molekulargewicht der erfindungsgemäß auf den Metalleffektpigmenten verwendenden wenigstens einen Polycarbonsäure, die mit wenigstens einem Polyglykolether verbunden ist, in einem Bereich von 200 bis 20000 g/mol, weiter bevorzugt von 300 bis 10000 g/mol. Als sehr geeignet hat sich ein mittlerer Molekulargewichtsbereich von 500 bis 8000 g/mol erwiesen und besonders bevorzugt ist ein Molekularbereich von 1000 bis 4000 g/mol.

Gemäß einer weiteren Variante der Erfindung liegt die Polycarbonsäure teilweise oder vollständig als Polycarbonsäuresalz vor.

Die Polycarbonsäuresalze können als Kationen Alkali- und/oder Erdalkalikationen enthalten. Bevorzugte Die Kationen der Polycarbonsäuresalze sind dabei bevorzugt Li⁺, Na⁺, K⁺, Mg²⁺ und/oder Ca²⁺ sowie deren Mischungen.

Vorzugsweise ist das Polycarbonsäuresalz ein Salz aus dem Carboxylat der Polycarbonsäure und einem oder mehreren Metallkation(en), wobei die Metallkationen vorzugsweise aus den Metallen ausgewählt werden, die in dem Metallkern des Metalleffektpigmentes enthalten sind.

Es hat sich als vorteilhaft herausgestellt, bei Verwendung von Polycarbonsäuresalzen, beispielsweise Metallseifen, solche auszuwählen, deren Kation(en) mit dem Metall bzw. den Metallen des Metalleffektpigmentes übereinstimmen, um in ein Anwendungsmedium nicht unnötig zusätzliche Ionen einzubringen.

Gemäß einer bevorzugten Variante werden das oder die Metallkation(en) des Polycarbonsäuresalzes aus der Gruppe der ein-, zwei- und/oder dreiwertigen Metallkationen ausgewählt.

Bevorzugte Kationen sind mithin Al³⁺, Fe³⁺, Fe²⁺, Cu²⁺ und/oder Zn²⁺.

Diese Polycarbonsäuremetallsalze können auch in-situ gebildet werden aus den Polycarbonsäuren, die auf den Metallpigmenten aufgebracht sind. Die Polycarbonsäuren können mit der Zeit mit dem Metallpigment unter Bildung der Metallseife reagieren. Dieses Verhalten ist auch von den üblicherweise als Schmiermittel verwendeten Fettsäuren, wie beispielsweise Stearinsäure oder Ölsäure, bekannt.

Gemäß einer bevorzugten Ausführungsform wird die wenigstens eine Polycarbonsäure, die vorzugsweise mit wenigstens einem Polyglykolether kovalent verbunden ist, als Schmiermittel zur Vermahlung der Metallpigmente verwendet. Gemäß einer weiter bevorzugten Ausführungsform werden diesem Schmiermittel keine weiteren Zusätze an gesättigten oder ungesättigten Fettsäuren wie Stearin- oder Ölsäuren zugesetzt.

Es hat sich gezeigt, dass die vorteilhaften Wirkungen des erfindungsgemäß zu verwendenden Additivs, d.h. der wenigstens eine Polycarbonsäure, die vorzugsweise mit wenigstens einem Polyglykolether kovalent verbunden ist, durch die Zugabe von herkömmlichen Fettsäuren während der Vermahlung beeinträchtigt werden.

Gemäß einer weiteren vorteilhaften Weiterbildung der Erfindung liegt die Pigmentpräparation in kompaktierter Form, vorzugsweise als Granulat, Pellets, Tabletten, Briketts, Würstchen oder als Paste, vor.

Vorzugsweise weist die Pigmentpräparation in kompaktierter Form eine Restfeuchte von bis zu etwa 15 Gew.-%, weiter bevorzugt von etwa 1 bis etwa 10 Gew.-%, noch weiter bevorzugt von etwa 3 bis etwa 8 Gew.-%, auf, wobei sich die Angabe Gew.-% auf das Gesamtgewicht der kompaktierten Metalleffektpigmentpräparation bezieht.

Die erfindungsgemäße Pigmentpräparation liegt besonders bevorzugt in Form einer Pigmentpaste mit einem Lösemittelgehalt aus einem Bereich von 30 - 80 Gew.-%, bezogen auf die Pigmentpaste, vor.

Die vorgenannten Darreichungsformen ermöglichen eine staubarme, vorzugsweise staubfreie, Handhabung der erfindungsgemäßen Pigmentpräparation. Die Pigmentpräparation kann einfach transportiert, dosiert und verarbeitet werden, ohne dass eine Gefahr für Mensch und Umwelt besteht. Insbesondere kann die erfindungsgemäße Pigmentpräparation in der kompaktierten Form einfach und zuverlässig in eine Flexodruckfarbe eingebracht werden. Die kompaktierte Pigmentpräparation wird durch einfaches Einrühren in der Flexodruckfarbe dispergiert.

Gemäß einer weiteren Variante enthält die erfindungsgemäße Präparation zusätzlich wenigstens ein von der Polycarbonsäure strukturell verschiedenes Dispergieradditiv.

Das gemäß einer erfindungsgemäßen Weiterbildung der Erfindung zusätzlich vorhandene Dispergieradditiv ist vorzugsweise im Wesentlichen nicht an die Pigmentoberfläche gebunden. Obgleich dieses zusätzliche Dispergieradditiv auch teilweise an Pigmentoberflächen der Metalleffektpigmente anhaften kann, liegt das zusätzlich verwendete Dispergieradditiv gemäß einer bevorzugten Weiterbildung der Erfindung im Wesentlichen ungebunden zwischen den Metalleffektpigmenten vor. Dieses zusätzliche Dispergieradditiv erleichtert eine Redispergierung der erfindungsgemäßen Pigmentpräparation und wirkt mithin ebenfalls einer Agglomeration von Metalleffektpigmenten entgegen.

Beispielsweise können als zusätzliches Dispergieradditiv Polymere mit sauren Gruppen verwendet werden. Bei den sauren Gruppen kann es sich beispielsweise um die Sulfatgruppe, Sulfonsäuregruppe, Phosphatgruppe, Phosphonsäuregruppe und Mischungen davon handeln.

Vorzugsweise liegt die Säurezahl des zusätzlichen Dispergieradditivs in einem Bereich von 70 bis 180 KOH/g, weiter bevorzugt von 110 bis 150 KOH/g.

Vorzugsweise liegt zusätzlich die Aminzahl des zusätzlichen Dispergieradditivs in einem Bereich von 40 mg/KOH/g bis 120 mg/KOH/g, weiter bevorzugt von 60 bis 80 mg/KOH/g.

Beispiele von kommerziell erhältlichen Dispergieradditiven sind Solsperse 20000, 24000, 3000, 32000, 32500, 33500, 34000 and 35200 (Avecia K.K.) oder Disperbyk-102, 106, 111, 161, 162, 163, 164, 166, 180, 190, 191 und 192 (BYK-Chemie GmbH 46462 Wesel, Deutschland,) oder Mischungen davon. Insbesondere hat sich Disperbyk-106, Disperbyk-102 oder Disperbyk 190 als sehr geeignet erwiesen, um in Kombination mit der wenigstens einen Polycarbonsäure, die vorzugsweise mit wenigstens einem Polyglykolether kovalent verbunden ist, verwendet zu werden.

Erfindungsgemäß ist es weiter bevorzugt, dass die in der Pigmentpräparation verwendeten Metalleffektpigmente eine Summenhäufigkeitsverteilung mit einem d₅₀-Wert in einem Bereich von 2,1 bis 2,8 µm und einem d₉₀-Wert in einem Bereich von 4,0 bis 8,0 µm aufweisen.

Erfindungsgemäß ist es noch weiter bevorzugt, dass die in der Pigmentpräparation verwendeten Metalleffektpigmente eine Summenhäufigkeitsverteilung mit einem d₅₀-Wert in einem Bereich von 2,3 bis 2,6 µm und einem d₉₀-Wert in einem Bereich von 4,5 bis 6 µm aufweisen.

Die Summenhäufigkeitsverteilung der Metalleffektpigmente wird dabei mittels Lasergranulometrie gemäß Herstellerangaben gemessen, vorzugsweise mit dem Malvern Mastersizer 2000 Application Firmware Version: 1.06 der Firma Malvern Instruments Ltd..

Die erfindungsgemäß in der Pigmentpräparation zu verwendenden Metalleffektpigmente weisen mithin vorzugsweise eine äußerst enge Größenverteilung, mithin eine äußerst enge Summenhäufigkeitsverteilung, auf. Durch die erfindungsgemäß bevorzugte enge Größenverteilung, dargestellt als Summenhäufigkeitsverteilung, weisen die Metalleffektpigmente beim Flexodruck ein nahezu einheitliches, vorzugsweise einheitliches, Übertragungs- oder Transferverhalten beim Übertrag der Farbe von der Tauchwalze auf die Rasterwalze zum Druckformzylinder und schließlich auf das Substrat auf.

Die erfindungsgemäß zu verwendenden Metalleffektpigmente weisen nicht nur vorzugsweise die vorstehend genannte enge Größenverteilung, ausgedrückt als Summenhäufigkeitsverteilung, und ein dadurch bedingtes einheitliches Übertragungs- oder Transferverhalten, sondern im Hinblick auf die äußerst geringe absolute mittlere Größe d₅₀ auch ein nahezu vollständiges, vorzugsweise vollständiges, Übertragungs- oder Transferverhalten auf. Auf Grund des nahezu vollständigen, vorzugsweise vollständigen, Transfers der Metalleffektpigmente aus der Flexodruckfarbe über die Tauchwalze, die Rasterwalze und den Druckformzylinder bis zum Verdrucken auf dem Substrat kommt es zu keiner Abreicherung der Metalleffektpigmente in der Flexodruckfarbe bzw. zu einer Anreicherung von Pigment auf einer der Walzen, Rollen oder Zylinder.

Somit eignet sich die erfindungsgemäße Pigmentpräparation mit Metalleffektpigmenten für kontinuierliche und lang andauernde Flexodruckprozesse, ohne dass es dabei zu Störungen auf Grund von Pigmentanreicherung auf einer Walze, Rolle oder einem Zylinder bzw. zu einer Pigmentabreicherung in der Flexodruckfarbe kommt.

Erfindungsgemäß können in der Pigmentpräparation neben Metalleffektpigmenten auch weitere Pigmente, beispielsweise Farbpigmente, enthalten sein. Bei den Farbpigmenten kann es sich beispielsweise um herkömmliche feinpartikuläre, im Wesentlichen sphärische oder irregulär geformte Buntpigmente handeln. Diese Buntpigmente weisen üblicherweise eine Partikelgröße von < 1 µm, weiter bevorzugt von < 0,5 µm auf. Selbstverständlich können in der Flexodruckfarbe auch lösliche Farbstoffe enthalten sein. Bei in der Flexodruckfarbe löslichen Farbstoffen besteht das Problem einer Abreicherung an löslichem Farbstoff in der Flexodruckfarbe nicht.

Gemäß einer weiteren bevorzugten Variante enthält die erfindungsgemäße Pigmentpräparation neben Metalleffektpigmenten keine weiteren partikulären Farbmittel, insbesondere keine Perlglanzpigmente und/oder keine Buntpigmente.

Mithin enthält bei dieser bevorzugten Ausführungsform die erfindungsgemäße Pigmentpräparation Metalleffektpigmente sowie wenigstens eine Polycarbonsäure, die vorzugsweise mit wenigstens einem Polyglykolether kovalent verbunden ist, sowie optional weitere Additive und optional Lösemittel.

Gemäß einer bevorzugten Variante liegt der Gehalt an Metalleffektpigmenten in der erfindungsgemäßen Pigmentpräparation in einem Bereich von 10 bis 80 Gew.-%, weiter bevorzugt von 20 bis 60 Gew.-%, noch weiter bevorzugt von 30 bis 55 Gew.-%, jeweils bezogen auf das Gesamtgewicht der Pigmentpräparation.

Weiterhin ist bevorzugt, dass der Gehalt an etwaigen Lösemittel(n) in einem Bereich von 20 bis 90 Gew.-%, weiter bevorzugt von 40 bis 80 Gew.-%, noch weiter bevorzugt von 45 bis 70 Gew.-%, jeweils bezogen auf das Gesamtgewicht der Pigmentpräparation, liegt.

Der Gehalt an etwaigen weiteren Additiven in der Pigmentpräparation liegt je Additiv vorzugsweise in einem Bereich von 0 bis 5 Gew.-%, vorzugsweise von 0,5 bis 2,5 Gew.-%, jeweils bezogen auf das Gesamtgewicht der Pigmentpräparation.

Vorzugsweise liegt die Pigmentpräparation als Flexodruckfarbe vor. In diesem Fall enthält die Pigmentpräparation zusätzlich zu dem Flexodruck geeignete Bindemittel.

Als Bindemittel werden vorzugsweise Cellulose-Derivate, beispielsweise Cellulosenitrat, Ethylcellulose, Ethylhydroxyethylcellulose und/oder Celluloseacetopropionat, Vinylpolymerisate, beispielsweise Polyvinylbutyrate, PVC-Mischpolymerisate, Polyacrylate und/oder Polymethacrylate, Styrol-Maleinsäure-Mischpolymerisate, Polyamidharze, Polyester, Polyurethane, Ketonharze, Malinatharze, Schellack oder Mischungen davon verwendet.

Bevorzugt werden die Bindemittel aus der Gruppe, die aus Nitrocellulose, Ethylcellulose, Polyvinylbutyral (PVB), Polyurethanen und Mischungen davon besteht, ausgewählt.

Bei einer ganz besonders bevorzugten Ausführungsform wird als Bindemittel eine Mischung aus Ethylcellulose und PVB ausgewählt. Hierbei kann das Mischungsverhältnis der beiden Komponenten im Bereich von 10 : 1 bis 1 : 10 Gewichtsteilen, bevorzugt von 5 : 1 bis 1 : 5 Gewichtsteilen und ganz besonders bevorzugt von 2 : 1 bis 1 : 2 Gewichtsteilen liegen. Mit diesem Bindemittelgemisch konnten besonders spaltfeste erfindungsgemäße Flexodruckfarben erhalten werden.

Als Lösemittel für Flexodruckfarben eignen sich Alkohole, beispielsweise Ethanol, 2-Propanol und/oder 1-Propanol, Glykolether, beispielsweise Methoxypropanol, Ethoxypropanol, Propylenglykol und/oder Dipropylenglykol, Monomethylether, Ester, beispielsweise Methylacetat, Ethylacetat, Isopropylacetat, Propylacetat, Methoxy- und/oder Ethoxypropylacetat, Ketone, beispielsweise 2-Butanon-4-Methyl-2-Penthanon, Aceton und/oder Cyclohexanon, aliphatische Kohlenwasserstoffe, wie beispielsweise Benzine oder Mischungen davon.

Als weitere Additive können die Flexodruckfarben Weichmacher, Wachse, wie beispielsweise Polyethylen- und/oder Polypropylenwachse, Gleitmittel, wie beispielsweise Silikone und/oder Fettsäureamide, Netzmittel, Dispergierhilfsmittel, etc. enthalten.

Die Flexodruckfarben können zum Bedrucken von Bedruckstoffen, wie beispielsweise Papier, Pappe, Karton, Metallfolie, beispielsweise Aluminiumfolie, Kunststofffolie, etc. oder Laminaten daraus verwendet werden.

Die bedruckten Substrate können vorzugsweise als Verpackungsmaterial oder als Etikett verwendet werden.

Die erfindungsgemäße Pigmentpräparation eignet sich insbesondere zur Herstellung einer Flexodruckfarbe.

Eine erfindungsgemäße Flexodruckfarbe weist beim Verdrucken vorzugsweise eine Auslaufzeit bei 25°C in einem DIN 4-Becher auf, die in einem Bereich von 15 bis 40 s, vorzugsweise von 20 bis 35 s, weiter bevorzugt von 25 bis 32 s, liegt.

Gemäß einer bevorzugten Variante liegt der Gehalt an Metalleffektpigmenten in der erfindungsgemäßen Flexodruckfarbe in einem Bereich von 5 bis 25 Gew.%, weiter bevorzugt von 8 bis 20 Gew.-%, noch weiter bevorzugt von 10 bis 16 Gew.-%, jeweils bezogen auf das Gesamtgewicht der Flexodruckfarbe.

Gemäß einer bevorzugten Variante liegt der Gehalt an Bindemittel in der erfindungsgemäßen Flexodruckfarbe in einem Bereich von 1 bis 10 Gew.%, weiter bevorzugt von 1,5 bis 8 Gew.-%, noch weiter bevorzugt von 2 bis 5 Gew.-%, jeweils bezogen auf das Gesamtgewicht der Flexodruckfarbe.

Weiterhin ist bevorzugt, dass der Gehalt an Lösemittel(n) in der erfindungsgemäßen Flexodruckfarbe in einem Bereich von 50 bis 95 Gew.%, weiter bevorzugt von 70 bis 93 Gew.-%, noch weiter bevorzugt von 80 bis 90 Gew.-%, jeweils bezogen auf das Gesamtgewicht der Flexodruckfarbe, liegt.

Der Gehalt an etwaigen weiteren Additiven in der Flexodruckfarbe liegt je Additiv vorzugsweise in einem Bereich von 0 bis 4 Gew.-%, vorzugsweise von 0,5 bis 2 Gew.-%, jeweils bezogen auf das Gesamtgewicht der Flexodruckfarbe.

Die Flexodruckfarbe ist herstellbar durch ein Verfahren, bei dem die erfindungsgemäße Pigmentpräparation in eine Flexodruckfarbe eingebracht, beispielsweise eingerührt oder anderweitig dispergiert wird. Die Dispergierung erfolgt solange, bis die erfindungsgemäße Pigmentpräparation gleichmäßig in der Flexodruckfarbe vorliegt.

Alternativ können selbstverständlich Bindemittel, Lösemittel und etwaige Additive zu der erfindungsgemäßen Pigmentpräparation unter Herstellung einer Flexodruckfarbe gegeben werden.

Die der Erfindung zu Grunde liegende Aufgabe wird des Weiteren durch ein Verfahren zur Herstellung einer Pigmentpräparation nach einem der Ansprüche 1 bis 12 gelöst, wobei das Verfahren folgenden Schritt umfasst:
Vermahlen von Metallgrieß mit einem d₅₀,_{Grieß} von 0,6 bis 2,4 µm sowie einem d₉₀ von 1,6 bis 4,3 µm in Gegenwart wenigstens einer Polycarbonsäure mit Mahlkörpern unter Erhalt von Metalleffektpigmenten, deren mittlere Größe d₅₀ in einem Bereich von 1,7 bis 2,8 µm und deren mittlere Dicke h₅₀ in einem Bereich von 15 bis 50 nm liegt.

Gemäß einer weiteren bevorzugten Variante der Erfindung weist der bei dem erfindungsgemäßen Verfahren einzusetzende Metallgrieß eine Summenhäufigkeitsverteilung mit einem d₅₀,_{Grieß} von 0,8 bis 2,2 µm sowie einem d₉₀ von 1,8 bis 4,0 µm auf.

Gemäß einer noch weiteren bevorzugten Variante der Erfindung weist der bei dem erfindungsgemäßen Verfahren einzusetzende Metallgrieß eine Summenhäufigkeitsverteilung mit einem d₅₀,_{Grieß} von 1,0 bis 2,0 µm sowie einem d₉₀ von 2,0 bis 3,8 µm auf

Die Summenhäufigkeitsverteilung des einzusetzenden Metallgrieß wird dabei mittels Lasergranulometrie gemessen, vorzugsweise mit dem Gerät Helos/BF - Magic, Version Windox 5.3.0.0 der Firma Sympatec GmbH, Clausthal-Zellerfeld. Der bei dem erfindungsgemäßen Verfahren verwendete Metallgrieß kann durch Verdüsen von flüssigem Metall in einem Zerstäuber und nachfolgender Klassierung des Metallgrießes erhalten werden. Die Klassierung kann beispielsweise unter Verwendung von Sieben oder Zyklonen erfolgen.

Der klassierte Metallgrieß mit der vorstehend angegebenen Summenhäufigkeitsverteilung wird sodann in Gegenwart wenigstens einer Polycarbonsäure, die vorzugsweise mit wenigstens einem Polyglykolether kovalent verbunden ist, mit Mahlkörpern und vorzugsweise in Gegenwart von Lösemitteln, vorzugsweise organischem Lösemittel, vermahlen. Bei dem Vermahlen des Metallgrießes kommt es zu einer mechanischen Verformung und zu einer Zerkleinerung der Metallgrießpartikel unter Erhalt von plättchenförmigen Pigmenten, die auch als Metalleffektpigmente bezeichnet werden.

Als Mahlkörper werden vorzugsweise Mahlkugeln verwendet. Diese können aus Edelstahl, Keramik oder Glas bestehen. Vorzugsweise werden Keramikkugeln als Mahlkörper verwendet.

Der Metallgrieß kann in einer Kugelmühle, beispielsweise Sturzmühle, Trommelmühle oder Rohrmühle, vermahlen werden. Gemäß einer bevorzugten Variante wird eine Rührwerkskugelmühle verwendet, die als horizontale oder vertikale Rührwerkskugelmühle ausgebildet sein kann. In einer Rührwerkskugelmühle erfolgt eine intensive Vermahlung des Metallgrießes, bei der sowohl eine Ausformung zu sehr dünnen Metallpigmenten als auch eine Zerkleinerung erfolgt unter Erhalt der erfindungsgemäßen plättchenförmigen Metallpigmenten.

Gemäß einer bevorzugten Variante der Erfindung erfolgt die Vermahlung des Metallgrießes für eine Zeitdauer, die vorzugsweise zwischen 8 und 125 Stunden, vorzugsweise zwischen 10 und 35 Stunden, noch weiter bevorzugt zwischen 12 und 25 Stunden, liegt.

Der mittlere Durchmesser der Mahlkugeln liegt vorzugsweise in einem Bereich von 0,2 bis 5,0 mm, weiter bevorzugt von 0,2 bis 4,5 mm, noch weiter bevorzugt von 0,3 bis 2 mm.

Bevorzugte Varianten des erfindungsgemäßen Verfahrens sind in den Unteransprüchen 18 und 19 angegeben.

Die Erfindung wird anhand der nachfolgenden Figuren und Beispiele veranschaulicht, ohne jedoch darauf beschränkt zu sein.

### Beispiele

### I Herstellung der Aluminiumeffektpigmente

### Beispiel 1a: Verdüsung Metallgrieß:

Zur Herstellung von erfindungsgemäßen Aluminiumpigmente wurde in einem Induktionsofen Aluminium eingebracht und geschmolzen. Anschließend wurde die Aluminiumschmelze in einen Induktionsofen mit Vorherd übergeben. Die im Vorherd bei einer Temperatur von etwa 720°C flüssig vorliegende Aluminiumschmelze wurde durch eine am Vorherd angebrachte Zerstäubungsdüse vertikal nach oben verdüst bzw. zerstäubt. Zum Zerstäuben der Aluminiumschmelze wurde eine geschlossene Düse eingesetzt. Die bei der Verdüsung entstandenen Aluminiumpartikel erstarren und erkalten im Fluge. Die Verdüsung, die auch als Zerstäubung bezeichnet wird, erfolgte unter Zufuhr von Heißgas bei etwa 600°C. Das zur Verdüsung eingesetzte Heißgas wurde verdichtet, danach in Gaserhitzern erhitzt und anschließend in die zu zerstäubende Aluminiumschmelze eingetragen. Die Abscheidung der Aluminiumpartikel erfolgte mittels Zentrifugalkraft. Der dort abgeschiedene pulverförmige Aluminiumgrieß hatte einen d₅₀ von < 20 µm. Die Gas-Feststoff-Trennung erfolgte in einem Filter. Die weitere Auftrennung dieses Aluminiumgrießes erfolgte durch weitere Klassierschritte. Daraus resultierte ein pulverförmiger Aluminiumfeinstgrieß mit einem einem d_{50,Grieß} von 1,1 µm und einem d_{90,Grieß} von 3,8 µm hergestellt.

### Beispiel 1 b: Herstellung Vermahlungsadditiv (in Anlehnung an die EP 1 304 210A1):

50 g Pripol 1009 (hydrierte C36-Dimersäure von Unichema) und 89 g MPEG 750 (Methoxypolyethylenglycol) wurden in ein Glasreaktionsgefäß eingewogen und unter N₂-Schutzgas und Rühren auf 80°C erwärmt. Anschließend wurde 0,8 g p-Toluolsulfonsäure (Katalysator) hinzugegeben und auf 180°C aufgeheizt. Entstehendes Reaktionswasser wurde über einen Wasserabscheider abgeschieden. Anhand der Säurezahl wurde der Fortschritt der Reaktion kontrolliert. Die Säurezahl wurde gemäß der DIN 53402 bestimmt. Die Reaktion wurde nach Erreichen einer Säurezahl von etwa 24 mg KOH/g Additiv gestoppt. Dies entspricht einem Veresterungsgrad von ca. 67 %. Das mittlere Molekulargewicht des entstandenen Esters betrug ca. 1750 g/ mol.

### Beispiel 1c: Vermahlung:

Zur Nassvermahlung des gemäß Schritt a) hergestellten Aluminiumfeinstgrießes wurden 1200 g dieses Metallgrießes in eine Rührwerkskugelmühle mit 2,5 kg Keramikkugeln (Durchmesser: 0,6 mm) und 2000 g Isopropanol sowie 80 g Mahladditiv nach Bsp. 1 b eingebracht und bei 1200 U/min 23 h lang vermahlen. Das Mahlprodukt wurde durch Spülen mit Lösemittel von den Keramikkugeln getrennt und über eine Labornutsche abfiltriert. Der Filterkuchen wurde anschließend auf einen Feststoffgehalt von 50 Gew.-% eingestellt.

### Beispiel 2:

Analog Beispiel 1, jedoch betrug die Vermahldauer 18h.

### Beispiel 3:

Analog Beispiel 1, jedoch wurde bei der Vermahlung ein Phosphorestersalz mit einer Säurezahl von 110 bis 140 mg KOH/g (Byk-Chemie, Wesel, Deutschland) zugefügt und die Vermahldauer betrug 16h.

### Beispiel 4:

Zur Nassvermahlung des gemäß Schritt 1a) hergestellten Aluminiumfeinstgrießes wurden 1200 g dieses Metallgrießes in eine Rührwerkskugelmühle mit 2,5 kg Keramikkugeln (Durchmesser: 0,6 mm) und 2000 g Isopropanol sowie 80 g Mahladditiv nach Bsp. 1 b eingebracht und bei 1200 U/min 10h lang vermahlen. Das Mahlprodukt wurde durch Spülen mit Lösemittel von den Mahlkugeln getrennt und über eine Labornutsche abfiltriert. Der Filterkuchen wurde anschließend auf einen Feststoffgehalt von 50 Gew.-% eingestellt.

### Vergleichsbeispiel 5:

Zur Nassvermahlung des gemäß Schritt 1a) hergestellten Aluminiumfeinstgrießes wurden 1200 g dieses Metallgrießes in eine Rührwerkskugelmühle mit 2,5 kg Keramikkugeln (Durchmesser: 0,6mm) und 2000 g Isopropanol sowie 80 g Mahladditiv nach Bsp. 1 b eingebracht und bei 1200 U/min 9h lang vermahlen. Das Mahlprodukt wurde durch Spülen mit Lösemittel von den Mahlkugeln getrennt und über eine Labornutsche abfiltriert. Der Filterkuchen wurde anschließend auf einen Feststoffgehalt von 50 Gew.-% eingestellt.

### Vergleichsbeispiel 6:

Analog Beispiel 1, jedoch wurde bei der Vermahlung ein Phosphorestersalz mit einer Säurezahl von 110 bis 140 mg KOH/g (Byk-Chemie, Wesel, Deutschland) zugefügt und die Vermahldauer betrug 33 h.

### Beispiel 7:

Zur Nassvermahlung wird anstelle des gemäß Schritt 1a) hergestellten Aluminiumfeinstgrießes 1200g Messingfeinstgrieß in eine Rührwerkskugelmühle mit 2,8 kg Keramikkugeln (Durchmesser: 0,4 mm) und 2100 g Isopropanol sowie 70 g Mahladditiv nach Bsp. 1 b eingebracht und bei 1100 U/min 15 h lang vermahlen. Das Mahlprodukt wurde durch Spülen mit Lösemittel von den Mahlkugeln getrennt und über eine Labornutsche abfiltriert. Der Filterkuchen wurde anschließend auf einen Feststoffgehalt von 50 Gew.-% eingestellt.

**Tabelle 1: Übersicht über Pigmentgrößen und -dicken verschiedener Proben**

| Probe | Mahldauer in h | d₅₀-Wert / µm | h₅₀ / nm |
|---|---|---|---|
| Beispiel 1 | 23 | 2,1 | 29 |
| Beispiel 2 | 18 | 2,4 | 31 |
| Beispiel 3 | 16 | 2,6 | 32 |
| Beispiel 4 | 10 | 2,8 | 34 |
| Vergleichsbeispiel 5 | 9 | 3,05 | 36 |
| Vergleichsbeispiel 6 | 33 | 1,2 | 27 |
| Beispiel 7 | 15 | 2,5 | 33 |

| | | | |
|---|---|---|---|
| Die Beispiele 1, 2, 3, 4 und 7 sind erfindungsgemäße Beispiele | | | |

### Vergleichsbeispiel 8: Vermahlung analog Beispiel 2 der EP 2 083 052 B1

Eine Kugelmühle wurde mit 10 g einer Dispersion (10 Gew.-% Pigment) des kommerziell erhältlichen PBVD-Pigments Metalure^{®} L 55700 (ECKART GmbH, Fürth, Deutschland), welches einen d₉₈-Wert von 21 µm aufweist, 1 g Disperbyk 180 (phosphoric acid groups containing dispersant acid number: 95 mgKOH/g additive, amine number: 95 mgKOH/g additive; Byk-Chemie GmbH, Wesel, Deutschland), 0,2 g Oktanphosphonsäure und 80 g 1-Methoxy-2-propanol befüllt. Die Mischung wurde mit 4 kg Keramikkugeln mit Durchmessern von 0.3 to 0.7 mm für 1 Stunde bei 750 U/min vermahlen. Das erhalte Metallpigment wies einen d₅₀-Wert von ca. 2 µm auf.

**Vergleichsbeispiel 9:** kommerziell erhältliches Metalure A-41506 (Firma Eckart GmbH).

**Vergleichsbeispiel 10:** kommerziell erhältliches Ultravario PM-12001 (Firma Eckart GmbH).

**Vergleichsbeispiel 11:** kommerziell erhältliche Mirrorgold Paste 590 001 (Firma Eckart GmbH).

### II Verwendung der Pigmente aus den Beispielen in Flexodruckfarben:

Die Pigmente der erfindungsgemäßen Beispiele und der Vergleichsbeispiele wurden in folgenden Prüfsystemen für Drucke abgeprüft:

### a) Flexodruckfarbe auf Basis von Nitrocellulose

2 g der kommerziell erhältlichen Nitrocellulosewolle AH09EN (Firma Hagedorn NC, Deutschland) und 0,9 g einer kommerziell erhältlichen Nitrocellulose-Darreichung in SAIB NC AH 27 SAIB (Firma Hagedorn NC, Deutschland) wurden in 17,6 g Ethylacetat, 1,9 g Isopropanol und 23,6 g Methoxypropanol gelöst. Anschließend wurde 1 g einer kommerziell erhältlichen Polyurethanbindemittellösung hinzugegeben.

Zu diesem Bindemittelmedium wurde so viel der Pigmentpräparation gegeben, dass ein Pigmentgehalt von 12 Gew.-% (Aluminiumpigmente) bzw. 20 Gew.-% (Goldbronzepigmente), jeweils bezogen auf das Gesamtgewicht der Farbe, resultiert. Die so erhaltenen Farben wurden vor dem Andrucken mit Methoxypropanol auf eine Druckviskosität von 30s Auslaufzeit DIN-4 Becher eingestellt. Daraus resultierten die unterschiedlichen Pigmentierungshöhen von 7,2 bis 11,9 Gew.-% (Aluminiumpigmente) bzw. 15,0 bis 18,3 Gew.-% (Golbronzepigmente), jeweils bezogen auf das Gesamtgewicht der fertigen Flexodruckfarbe.

### b) Flexodruckfarbe auf Basis von Polyvinylbutyal und Ethylcellulose

1,5 g eines kommerziell erhältlichen Bindemittels auf Basis Ethylcellulose (Fa. Dow) wurden in 15 g Ethylacetat gelöst. 1,5 g eines kommerziell erhältlichen Bindemittels auf Basis Polyvinylbutyral (Firma Kuraray, Deutschland) wurden in 15 g Ethanol, 11 g Isopropanol und 3 g GB-Ester (Fa. Silbermann) gelöst und zur Lösung aus Ethylcellulose in Ethylacetat gegeben.

Zu diesem Bindemittelmedium wurde so viel der Pigmentpräparation gegeben, dass ein Pigmentgehalt von 12 Gew.-% (Aluminiumpigmente) bzw. 15 Gew.-% (Goldbronzepigmente) jeweils bezogen auf das Gesamtgewicht der Farbe, resultiert. Die so erhaltenen Farben wurden vor dem Andrucken mit Isopropanol auf eine Druckviskosität von 30s Auslaufzeit DIN-4 Becher eingestellt. Daraus resultierten die unterschiedlichen Pigmentierungshöhen von 6,8 bis 10,4 Gew.-% (Aluminiumpigmente) bzw. 11,8 bis 14,3 Gew.-% (Goldbronzepigmente), jeweils bezogen auf das Gesamtgewicht der fertigen Flexodruckfarbe.

### Erstellung der Andrucke:

Die so erhaltenen druckfertigen Farben wurden auf einem "Erichsen Flexiproof 100" Laborandruckgerät (Lineatur 80 l/cm, Schöpfvolumen 13cm³/m²) auf einer Melinex 401-Folie (PET-Folie, 50 µm) angedruckt. Anhand dieser Andrucke wurden die folgenden Parameter bestimmt:

### Optische Bewertung:

Die Drucke wurden auf der Rückseite optisch durch eine Glanzmessung bei 60° in Anlehnung an die DIN 67 530 (Gerät: micro-Tri-gloss von Byk-Gardner, Geretsried, Deutschland) charakterisiert. Kalibriert wurde hier mittels Dunkelkalibrierung sowie einer schwarzen Spiegelglasplatte mit Werten von 92 für 60°.

### Bewertung der Deckung / Transferverhalten:

Die Deckung wurde mittels eines Techkon RT-120 Durchlichtdensitometers und einer Techkon LP-40 Leuchtplatte (beides Firma Techkon, Königstein, Deutschland) ermittelt (Modus T-Den). Je höher der gemessene Wert ist, dest besser ist die Deckung.

### Bewertung der Druckkörnigkeit und der Farbwerte:

Die Drucke wurden mit Hilfe eines BYK-mac Spektralfotometers (Byk-Gardner, Geretsried, Deutschland) vermessen. Ausschlaggebend für die Druckkörnigkeit ist der Wert "grainity". Ist dieser niedrig, so ist der Druck sehr gleichmäßig und wird vom Auge hochwertiger erachtet als ein Druck mit höherem Wert.
Außerdem wurden die Farbwerte im LAB-System gemessen und ausgewertet. Bei Goldbronzepigmenten ist insbesondere der b*-Wert interessant. Bei höheren b*-Werten erscheint der Druck intensiver gelb als bei einem vergleichsweise niedrigeren Wert.

### Bewertung der Spaltfestigkeit der verdruckten Farbe:

Zur Überprüfung der Spaltfestigkeit zwischen Pigment und Bindemittel wurde nach vollständigem Aushärten der Farbe ein Klebestreifen fest und blasenfrei auf die Oberfläche geklebt. Anschließend wurde dieser Klebestreifen wieder abgezogen, so dass der Untergrund nicht beschädigt wurde. Die Spaltfestigkeit wurde anhand eines Notensystems in Anlehnung an die DIN EN ISO 4628-1 visuell beurteilt. Eine schlechte Spaltfestigkeit spiegelt sich in einem entsprechend starken Ausriss aus dem Druck wieder.

**Tabelle 1: Ergebnisse Andrucke Basis NC (Aluminiumpigmente)**

| Probe | Flexodruckfarbe auf Basis von Nitrocellulos | | | | |
|---|---|---|---|---|---|
| | Pigmentierung in Gew.-% | Glanz | Deckung | Spaltfestigkeit | Körnigkeit |
| Beispiel 1 | 11,6 | 448 | 1,1 | sehr gut (0) | 3,1 |
| Beispiel 2 | 11,9 | 458 | 1,1 | gut (1) | 3,4 |
| Beispiel 3 | 10,7 | 460 | 1,0 | gut (1) | 3,7 |
| Vergleichsbeispiel 5 | 10,2 | 411 | 0,6 | weniger gut (3) | 7,2 |
| Vergleichsbeispiel 6 | 10,5 | 328 | 0,8 | sehr gut (0) | 5,2 |
| Vergleichsbeispiel 8 | 8,4 | 365 | 0,6 | weniger gut (3) | 7,6 |
| Vergleichsbeispiel 9 | 7,2 | 530 | 0,7 | sehr gut (0) | 7,5 |
| Vergleichsbeispiel 10 | 8,0 | 404 | 0,5 | weniger gut (3) | 8,1 |

**Tabelle 2: Ergebnisse Andrucke Flexofarbe Basis PVB / EC (Aluminiumpigmente)**

| Probe | Flexodruckfarbe auf Basis Ethylcellulose und Polyvinylbutyral | | | | |
|---|---|---|---|---|---|
| | Pigmentierung in Gew.-% | Glanz | Deckung | Spaltfestigkeit | Körnigkeit |
| Beispiel 1 | 9,8 | 448 | 1,4 | sehr gut (0) | 3,0 |
| Beispiel 2 | 10,3 | 458 | 1,5 | sehr gut (0) | 2,6 |
| Beispiel 3 | 10,2 | 460 | 1,5 | gut (1) | 2,7 |
| Beispiel 4 | 10,4 | 499 | 1,8 | noch gut (2) | 2,2 |
| Vergleichsbeispiel 5 | 10,4 | 503 | 1,6 | weniger gut (3) | 2,0 |
| Vergleichsbeispiel 8 | 9,3 | 365 | 0,8 | schlecht (4) | 6,7 |
| Vergleichsbeispiel 9 | 6,8 | 513 | 0,5 | sehr gut (0) | 10,0 |
| Vergleichsbeispiel 10 | 7,4 | 404 | 0,6 | sehr gut (0) | 9,0 |

Die Ergebnisse für die Aluminiumpigmente dargestellt in den beiden Tabellen verdeutlichen die Vorteile der erfindungsgemäßen Pigmente und der unter Verwendung dieser Pigmente hergestellten erfindungsgemäßen Druckfarben. Die Beispiele 1-4 (erfindungsgemäße Beispiele) zeigen in beiden Systemen exzellente Glanzwerte, sehr gute Deckungen, eine gute Spaltfestigkeit und einen extrem gleichmäßigen Druck.

Die Pigmente der Vergleichsbeispiele waren in einzelnen Eigenschaften vergleichbar zu den Pigmenten der erfindungsgemäßen Beispiele, allerdings versagten die Pigmente der Vergleichsbeispiele im Unterschied zu den Pigmenten der erfindungsgemäßen Beispiele immer in mindestens einer Eigenschaft.
So zeigten die Pigmente des Vergleichsbeispiels 5 zwar in der Flexodruckfarbe auf Basis PVB / EC einen exzellenten Glanz und auch eine gute Deckung, allerdings ist bei den Pigmenten dieses Beispiels die Haftung weniger gut als bei den erfindungsgemäßen Pigmenten. Bei Einsatz in Flexodruckfarben auf Basis NC zeigten die Pigmente des Vergleichsbeispiels 5 einen deutlich niedrigeren Glanz und niedrigere Deckung als die erfindungsgemäßen Pigmente.
Die Pigmente des Vergleichsbeispiel 6 sind ebenfalls in der Flexodruckfarbe auf Basis NC deutlich weniger deckend und weniger glänzend als die erfindungsgemäßen Pigmente.

Die Pigmente der weiteren Vergleichsbeispiele 8-10 zeigen alle in beiden Farbsystemen einen deutlich schlechteren Transfer und daher eine deutlich niedrigere Deckung als die erfindungsgemäßen Pigmente. Durch diesen schlechten Transfer wird der Druck auch ungleichmäßig, was sich in der - verglichen zu den erfindungsgemäßen Pigmente und Farben daraus - sehr hohen Körnigkeit ausdrückt.

**Tabelle 4: Ergebnisse Andrucke Basis PVB / EC (Goldbronzepigmente)**

| Probe | Flexodruckfarbe auf Basis von Polyvinylbutyral und Ethylcellulose | | | | |
|---|---|---|---|---|---|
| | Pigmentierung | 1 Glanz | Deckung | b (25°) | b (45°) |
| Beispiel 7 | 14,3 | 223 | 0,6 | 20,0 | 11,7 |
| Vergleichsbeispiel 11 | 11,8 | 224 | 0,3 | 14,7 | 6,8 |

**Tabelle 5: Ergebnisse Andrucke Basis NC (Goldbronzepigmente)**

| Probe | Flexodruckfarbe auf Basis von Nitrocellulose | | | | |
|---|---|---|---|---|---|
| | Pigmentierung | Glanz | Deckung | b (25°) | b (45°) |
| Beispiel 7 | 18,3 | 265 | 0,7 | 13,4 | 6,7 |
| Vergleichsbeispiel 11 | 15,0 | 244 | 0,4 | 9,8 | 12,3 |

Auch bei den Goldbronzepigmenten zeigten sich die Vorteile der erfindungsgemäßen Pigmente. Die Drucke waren deckender und hatten den gleichen oder sogar einen höheren Glanz als die Vergleichsandrucke. Außerdem wiesen die Drucke der erfindungsgemäßen Pigmente eine intensivere gelbliche Farbe auf (höherer b*-Wert). Durch die bessere Deckung und den intensiver gelben Farbton bei mindestens gleichbleibendem Glanz wirken die Drucke auf den Betrachter deutlich hochwertiger als die Drucke des Vergleichbeispiels.

## Patentansprüche

1. Pigmentpräparation mit Metallefifektpigmenten,
**dadurch gekennzeichnet,**
**dass** die Pigmentpräparation Metallefifektpigmente, deren mittlere Größe d₅₀ in einem Bereich von 1,7 bis 2,8 µm und deren mittlere Dicke h₅₀ in einem Bereich von 15 bis 50 nm liegt, sowie wenigstens eine Polycarbonsäure enthält.

2. Pigmentpräparation mit Metallefifektpigmenten nach Anspruch 1,
**dadurch gekennzeichnet,**
**dass** die Metallefifektpigmente durch Naßvermahlung hergestellt sind.

3. Pigmentpräparation mit Metallefifektpigmenten nach einem der vorstehenden Ansprüchen,
**dadurch gekennzeichnet,**
**dass** die Metallefifektpigmente eine mittlere Dicke h₅₀ aus einem Bereich von 20 bis 40 nm aufweisen.

4. Pigmentpräparation mit Metallefifektpigmenten nach einem der vorstehenden Ansprüchen,
**dadurch gekennzeichnet,**
**dass** die Metallefifektpigmente eine mittlere Größe d₅₀ aus einem Bereich von 1,9 bis 2,8 µm aufweisen.

5. Pigmentpräparation mit Metalleffektpigmenten nach einem der vorstehenden Ansprüchen,
**dadurch gekennzeichnet,**
**dass** die Metalleffektpigmente eine mittlere Größe d₅₀ aus einem Bereich von von 2,1 bis 2,8 µm aufweisen.

6. Pigmentpräparation mit Metalleffektpigmenten nach einem der vorstehenden Ansprüche,
**dadurch gekennzeichnet,**
**dass** das Metalleffektpigment aus Metall, das aus der Gruppe, die aus Aluminium, Aluminiumlegierungen, Kupfer, Kupferlegierungen und Messing und Eisen besteht, ausgewählt wird, besteht.

7. Pigmentpräparation mit Metalleffektpigmenten Anspruch 6,
**dadurch gekennzeichnet,**
**dass** das Metalleffektpigment aus Aluminium oder Aluminiumlegierungen besteht.

8. Pigmentpräparation mit Metalleffektpigmenten nach einem der vorstehenden Ansprüche,
**dadurch gekennzeichnet,**
**dass** die wenigstens eine Polycarbonsäure wenigstens 4 Kohlenstoffatome aufweist und die wenigstens eine Polycarbonsäure vorzugsweise mit wenigstens einem Polyglykolether kovalent verbunden ist.

9. Pigmentpräparation mit Metalleffektpigmenten nach einem der vorstehenden Ansprüche,
**dadurch gekennzeichnet,**
**dass** die Pigmentpräparation zusätzlich wenigstens ein von der Polycarbonsäure strukturell verschiedenes Dispergieradditiv enthält.

10. Pigmentpräparation mit Metalleffektpigmenten nach einem der vorstehenden Ansprüche,
**dadurch gekennzeichnet,**
**dass** die Metalleffektpigmente eine Summenhäufigkeitsverteilung mit einem d₅₀-Wert in einem Bereich von 2,1 bis 2,8 µm und einen d₉₀-Wert in einem Bereich von 4,0 bis 8,0 µm aufweisen.

11. Pigmentpräparation mit Metalleffektpigmenten nach einem der vorstehenden Ansprüche,
**dadurch gekennzeichnet,**
**dass** der Gehalt an Metalleffektpigmenten in einem Bereich von 10 bis 90 Gew.-%, bezogen auf das Gesamtgewicht der Pigmentpräparation, liegt.

12. Pigmentpräparation mit Metalleffektpigmenten nach einem der vorstehenden Ansprüche,
**dadurch gekennzeichnet,**
**dass** die Pigmentpräparation als Flexodruckfarbe vorliegt.

13. Verwendung der Pigmentpräparation nach einem der Ansprüche 1 bis 12 in einer Flexodruckfarbe.

14. Flexodruckfarbe enthaltend eine Pigmentpräparation nach einem der Ansprüche 1 bis 12.

15. Flexodruckfarbe nach Anspruch 14,
**dadurch gekennzeichnet,**
**dass** sie wenigstens ein Lösemittel enthält und eine Viskosität von einer Auslaufzeit bei 25 °C in einem DIN 4-Becher aus einem Bereich von 15 bis 40 s, aufweist.

16. Flexodruckfarbe nacheinem der Ansprüche 14 oder 15,
**dadurch gekennzeichnet,**
**dass** sie als Bindemittel ein Gemisch aus Ethylcellulose und Polyvinylbutyral enthält.

17. Verfahren zum Herstellen einer Pigmentpräparation nach einem der Ansprüche 1 bis 12,
**dadurch gekennzeichnet,**
**dass** das Verfahren folgenden Schritt umfasst:
Vermahlen von Metallgrieß mit einem d₅₀,_{Grieß} von 0,6 bis 2,4 µm sowie einem d₉₀ von 1,6 bis 4,3 µm in Gegenwart wenigstens einer Polycarbonsäure mit Mahlkörpern unter Erhalt von Metalleffektpigmenten, deren mittlere Größe d₅₀ in einem Bereich von 1,7 bis 2,8 µm und deren mittlere Dicke h₅₀ in einem Bereich von 15 bis 50 nm liegt.

18. Verfahren zum Herstellen einer Pigmentpräparation nach Anspruch 17,
**dadurch gekennzeichnet,**
**dass** der Metallgrieß in einer Rührwerkskugelmühle vermahlen wird.

19. Verfahren zum Herstellen einer Pigmentpräparation nach Anspruch 17 oder 18,
**dadurch gekennzeichnet,**
**dass** zusätzlich wenigstens ein von der Polycarbonsäure strukturell verschiedenes Dispergieradditiv zugesetzt wird.
